# EUROPEAN PATENT SPECIFICATION

(11) **EP 3 893 349 B1**
(45) Date of publication and mention of the grant of the patent: **01.03.2023**
(21) Application number: 20804798.5
(22) Date of filing: 12.05.2020
(51) Int. Cl.: H02H 3/02, H02H 3/087, H02J 3/38, H02J 3/00

(54) **PHOTOVOLTAIC INVERTER, AND PHOTOVOLTAIC POWER GENERATION SYSTEM FOR SAME**
PHOTOVOLTAISCHER WECHSELRICHTER UND PHOTOVOLTAISCHES ENERGIEERZEUGUNGSSYSTEM DAFÜR
ONDULEUR PHOTOVOLTAÏQUE ET SYSTÈME DE PRODUCTION D'ÉNERGIE PHOTOVOLTAÏQUE POUR CELUI-CI

(30) Priority: 14.05.2019 CN 201910409600
(43) Date of publication of application: 13.10.2021
(73) Proprietor: Huawei Digital Power Technologies Co., Ltd., Futian District, Shenzhen, Guangdong 518043 (CN)
(72) Inventor: GAO, Yongbing, Shenzhen, Guangdong 518129 (CN); QIAN, Bin, Shenzhen, Guangdong 518129 (CN); ZHOU, He, Shenzhen, Guangdong 518129 (CN)
(74) Representative: Gill Jennings & Every LLP
(86) International application number: PCT/CN2020/089804
(87) International publication number: WO 2020/228701

(56) References cited:
- CN-A- 106 899 268
- CN-A- 107 611 959
- CN-A- 110 224 381
- JP-A- 2016 054 612
- JP-A- 2016 054 612
- JP-A- 2018 100 877
- US-A1- 2013 194 706
- US-A1- 2016 164 457

## Description

### TECHNICAL FIELD

This application relates to the field of photovoltaic power generation technologies, and in particular, to a photovoltaic inverter and a photovoltaic power generation system thereof.

### BACKGROUND

A photovoltaic inverter is an important device in a photovoltaic power generation system. The photovoltaic inverter mainly has two basic structures: a single-stage structure and a double-stage structure. A schematic diagram of a single-stage photovoltaic inverter is shown in FIG. 1. The single-stage photovoltaic inverter implements maximum power point tracking and grid-tied inversion functions by using a first-stage DC/AC (direct current/alternating current) converter, featuring high system efficiency, a small volume, and a light weight. A schematic diagram of a double-stage photovoltaic inverter is shown in FIG. 2 and FIG. 3, where a DC/DC boost circuit is located at a pre-stage, and a DC/AC converter is located at a post-stage. The pre-stage DC/DC boost circuit usually includes a boost boost circuit (boost converter or step-up converter, boost chopper circuit) and a bypass diode. A schematic diagram is shown in FIG. 4. The boost boost circuit (a circuit marked with a dashed line box in FIG. 4) can help the photovoltaic inverter obtain a wider input voltage range and a wider MPPT (Maximum Power Point Tracking, maximum power point tracking) voltage range.

The DC/AC converter in the photovoltaic inverter is electrically connected to a photovoltaic module by using a positive direct current bus and a negative direct current bus. When the positive direct current bus and the negative direct current bus are faulty due to a fault in a component or a line such as the DC/AC converter or a bus (bus) capacitor in the photovoltaic inverter, for example, when a short-circuit fault occurs on the positive direct current bus and the negative direct current bus, an overvoltage fault occurs on the positive direct current bus and the negative direct current bus, or a voltage imbalance fault occurs on the positive direct current bus and the negative direct current bus, the photovoltaic module fails to be disconnected from the photovoltaic inverter, and energy generated by the photovoltaic module is continuously injected into a faulty point. As a result, further spreading of the fault may be caused.

JP 2018 100877 and JP 2016 054612 both disclose photovoltaic inverters.

### SUMMARY

The purpose of the present invention is to provide a photovoltaic inverter, to reduce a risk of further spreading of a fault in the photovoltaic inverter and reduce costs.

According to a first aspect, the present invention, as defined by the appended claims, provides a photovoltaic inverter, including a DC/AC converter, a positive direct current bus, a negative direct current bus, a drive control circuit, and at least one first unit, where a first end of the positive direct current bus and a first end of the negative direct current bus are electrically connected to the DC/AC converter respectively, and the first unit includes a first bypass circuit and an isolation circuit, where when a first end of the isolation circuit is electrically connected to a second end of the positive direct current bus, a second end of the isolation circuit is configured to electrically connect to a positive output end of a first photovoltaic module, and a second end of the negative direct current bus is configured to electrically connect to a negative output end of the first photovoltaic module; a first end of the first bypass circuit is electrically connected to the second end of the isolation circuit, and a second end of the first bypass circuit is electrically connected to the second end of the negative direct current bus; and a first end of the drive control circuit is electrically connected to a third end of the isolation circuit, a second end of the drive control circuit is electrically connected to a third end of the first bypass circuit, and after the drive control circuit is configured to detect that the positive direct current bus and the negative direct current bus are faulty, the drive control circuit is configured to control the first end and the second end of the first bypass circuit to be connected and is configured to control the first end and the second end of the isolation circuit to be disconnected, so that the first photovoltaic module is disconnected from the positive direct current bus, where a time point at which the isolation circuit is disconnected is later than a time point at which the first bypass circuit is connected; or when a first end of the isolation circuit is electrically connected to a second end of the negative direct current bus, a second end of the isolation circuit is configured to electrically connect to a negative output end of the first photovoltaic module, and a second end of the positive direct current bus is configured to electrically connect to a positive output end of the first photovoltaic module; a first end of the first bypass circuit is electrically connected to the second end of the positive direct current bus, and a second end of the first bypass circuit is electrically connected to the second end of the isolation circuit; and a first end of the drive control circuit is electrically connected to a third end of the isolation circuit, a second end of the drive control circuit is electrically connected to a third end of the first bypass circuit, and after the drive control circuit is configured to detect that the positive direct current bus and the negative direct current bus are faulty, the drive control circuit is configured to control the first end and the second end of the first bypass circuit to be connected and is configured to control the first end and the second end of the isolation circuit to be disconnected, so that the first photovoltaic module is disconnected from the negative direct current bus, where a time point at which the isolation circuit is disconnected is later than a time point at which the first bypass circuit is connected.

In the photovoltaic inverter provided by the present invention, the drive control circuit and the isolation circuit are disposed. When the drive control circuit detects that the positive direct current bus and the negative direct current bus are faulty, the drive control circuit controls the first end and the second end of the isolation circuit to be disconnected, so that the first photovoltaic module is disconnected from the positive direct current bus or the negative direct current bus. Therefore, the first photovoltaic module cannot continue to transfer energy to a faulty point, further spreading of the faulty point can be prevented, and a risk of spreading of the fault in the photovoltaic inverter is reduced. In addition, the first bypass circuit is further disposed. After the drive control circuit is configured to detect that the positive direct current bus and the negative direct current bus are faulty, the drive control circuit controls the first bypass circuit to be connected, so that a current flowing through the isolation circuit is less than or equal to a preset current, and the drive control circuit controls the first end and the second end of the isolation circuit to be disconnected, so that the first photovoltaic module is disconnected from the positive direct current bus, where the time point at which the isolation circuit is disconnected is later than the time point at which the first bypass circuit is connected. An advantage of this disposition is that the current flowing through the isolation circuit is relatively low when the first end and the second end of the isolation circuit are disconnected. This provides a condition for low-current disconnection of the first end and the second end of the isolation circuit, avoids a voltage surge or arcing generated when the first end and the second end of the isolation circuit are directly disconnected, and can prevent the isolation circuit from being damaged by a high voltage generated when the isolation circuit is directly disconnected. In this application, thanks to disposition of the first bypass circuit and the isolation circuit, when the isolation circuit is disconnected, the current flowing through the isolation circuit is relatively low, there is a relatively low requirement on a high-current breaking capability of the isolation circuit, and costs are also relatively low.

Further, the first bypass circuit is a normally open switch, the isolation circuit is a normally open breaker, and when the photovoltaic inverter is started, after the drive control circuit controls the first bypass circuit so that a voltage difference between the first end and the second end of the isolation circuit is less than or equal to a preset voltage, the drive control circuit is configured to control the first end and the second end of the isolation circuit to be connected, so that the first photovoltaic module is connected to the positive direct current bus and the negative direct current bus respectively; and after the isolation circuit is connected, the drive control circuit is further configured to control the first end and the second end of the first bypass circuit to be disconnected, to complete starting of the photovoltaic inverter. The drive control circuit inputs a pulse-width modulation signal to the first bypass circuit, so that the first bypass circuit is intermittently connected and that the voltage difference between the first end and the second end of the isolation circuit is less than or equal to the preset voltage. Therefore, an instantaneous high current can be prevented when the isolation circuit is directly connected, and lines and components such as a PV capacitor and a bus capacitor can be prevented from being damaged.

Further, the first unit further includes at least one second unit, and the second unit includes a second bypass circuit; and when the first end of the isolation circuit is electrically connected to the second end of the positive direct current bus, a first end of the second bypass circuit is electrically connected to the second end of the isolation circuit and is configured to electrically connect to a first end of a second photovoltaic module, a second end of the second bypass circuit is electrically connected to the second end of the negative direct current bus and is configured to electrically connect to a second end of the second photovoltaic module, the second end of the drive control circuit is electrically connected to a third end of the second bypass circuit, and after the drive control circuit is configured to detect that the positive direct current bus and the negative direct current bus are faulty, the drive control circuit is configured to control the first end and the second end of the second bypass circuit to be connected and is configured to control the first end and the second end of the isolation circuit to be disconnected, so that the second photovoltaic module is disconnected from the positive direct current bus, where a time point at which the isolation circuit is disconnected is later than a time point at which the second bypass circuit is connected; or when the first end of the isolation circuit is electrically connected to the second end of the negative direct current bus, a first end of the second bypass circuit is electrically connected to the second end of the positive direct current bus and is configured to electrically connect to a first end of a second photovoltaic module, a second end of the second bypass circuit is electrically connected to the second end of the isolation circuit and is configured to electrically connect to a second end of the second photovoltaic module, the second end of the drive control circuit is electrically connected to a third end of the second bypass circuit, and after the drive control circuit is configured to detect that the positive direct current bus and the negative direct current bus are faulty, the drive control circuit is configured to control the first end and the second end of the second bypass circuit to be connected and is configured to control the first end and the second end of the isolation circuit to be disconnected, so that the second photovoltaic module is disconnected from the negative direct current bus, where a time point at which the isolation circuit is disconnected is later than a time point at which the second bypass circuit is connected. Because the first unit further includes at least one second unit, and the second unit is configured to electrically connect to the second photovoltaic module, the photovoltaic inverter can generate relatively high power, thereby improving applicability of the photovoltaic inverter. In addition, a second bypass circuit and a first bypass circuit in one first unit are jointly connected to a same isolation circuit. Therefore, a quantity of isolation circuits can be reduced, and this helps reduce costs.

According to the invention, the photovoltaic inverter further includes a bus capacitor, two ends of the bus capacitor are electrically connected to the positive direct current bus and the negative direct current bus respectively, and the first unit further includes a first backflow prevention switch; and when the first end of the isolation circuit is electrically connected to the second end of the positive direct current bus, a first end of the first backflow prevention switch is electrically connected to the second end of the positive direct current bus, and a second end of the first backflow prevention switch is electrically connected to the first end of the isolation circuit, or a first end of the first backflow prevention switch is electrically connected to the second end of the isolation circuit, and a second end of the first backflow prevention switch is electrically connected to the first end of the first bypass circuit, or a first end of the first backflow prevention switch is electrically connected to the second end of the first bypass circuit, and a second end of the first backflow prevention switch is electrically connected to the second end of the negative direct current bus, where after the first bypass circuit is connected, the first backflow prevention switch is configured to prevent the bus capacitor from being discharged by using the first bypass circuit; or when the first end of the isolation circuit is electrically connected to the second end of the negative direct current bus, a first end of the first backflow prevention switch is electrically connected to the second end of the positive direct current bus, and a second end of the first backflow prevention switch is electrically connected to the first end of the first bypass circuit, or a first end of the first backflow prevention switch is electrically connected to the second end of the first bypass circuit, and a second end of the first backflow prevention switch is electrically connected to the second end of the isolation circuit, or a first end of the first backflow prevention switch is electrically connected to the first end of the isolation circuit, and a second end of the first backflow prevention switch is electrically connected to the second end of the negative direct current bus, where after the first bypass circuit is connected, the first backflow prevention switch is configured to prevent the bus capacitor from being discharged by using the first bypass circuit. The first backflow prevention switch is a diode, the first end of the first backflow prevention switch is a cathode of the diode, and the second end of the first backflow prevention switch is an anode of the diode. Because the first backflow prevention switch is disposed, the bus capacitor can be prevented from being discharged by using the first bypass circuit. In addition, when the photovoltaic inverter includes a plurality of third units, when the first bypass circuit is connected, the first backflow prevention switch can further prevent a third photovoltaic module electrically connected to a third unit from forming a loop by using the first bypass circuit, thereby preventing a risk of damage caused by an excessively high current to the photovoltaic inverter.

Further, the photovoltaic inverter further includes a bus capacitor, two ends of the bus capacitor are electrically connected to the positive direct current bus and the negative direct current bus respectively, and the first unit further includes a first backflow prevention switch; and when the first end of the isolation circuit is electrically connected to the second end of the positive direct current bus, a first end of the first backflow prevention switch is electrically connected to the second end of the isolation circuit and the first end of the second bypass circuit respectively, and a second end of the first backflow prevention switch is electrically connected to the first end of the first bypass circuit, or a first end of the first backflow prevention switch is electrically connected to the second end of the first bypass circuit, and a second end of the first backflow prevention switch is electrically connected to the second end of the negative direct current bus and the second end of the second bypass circuit respectively, where after the first bypass circuit is connected, the first backflow prevention switch is configured to prevent the bus capacitor and the second photovoltaic module from being discharged by using the first bypass circuit; or when the first end of the isolation circuit is electrically connected to the second end of the negative direct current bus, a first end of the first backflow prevention switch is electrically connected to the second end of the positive direct current bus and the first end of the second bypass circuit respectively, and a second end of the first backflow prevention switch is electrically connected to the first end of the first bypass circuit, or a first end of the first backflow prevention switch is electrically connected to the second end of the first bypass circuit, and a second end of the first backflow prevention switch is electrically connected to the second end of the isolation circuit and the second end of the second bypass circuit respectively, where after the first bypass circuit is connected, the first backflow prevention switch is configured to prevent the bus capacitor and the second photovoltaic module from being discharged by using the first bypass circuit. The first backflow prevention switch is a diode, the first end of the first backflow prevention switch is a cathode of the diode, and the second end of the first backflow prevention switch is an anode of the diode. Because the first backflow prevention switch is disposed, the first backflow prevention switch can prevent the bus capacitor from being discharged by using the first bypass circuit, and when the first bypass circuit is connected, the first backflow prevention switch can further prevent the second photovoltaic module from forming a current loop by using the second unit and the first bypass circuit, thereby preventing a risk of damage caused by an excessively high current to the first bypass circuit.

Further, the photovoltaic inverter further includes a bus capacitor, two ends of the bus capacitor are electrically connected to the positive direct current bus and the negative direct current bus respectively, and the second unit further includes a second backflow prevention switch; and when the first end of the isolation circuit is electrically connected to the second end of the positive direct current bus, a first end of the second backflow prevention switch is electrically connected to the second end of the isolation circuit and the first end of the first bypass circuit respectively, and a second end of the second backflow prevention switch is electrically connected to the first end of the second bypass circuit, or a first end of the second backflow prevention switch is electrically connected to the second end of the second bypass circuit, and a second end of the second backflow prevention switch is electrically connected to the second end of the negative direct current bus and the second end of the first bypass circuit respectively, where after the second bypass circuit is connected, the second backflow prevention switch is configured to prevent the bus capacitor and the first photovoltaic module from being discharged by using the second bypass circuit; or when the first end of the isolation circuit is electrically connected to the second end of the negative direct current bus, a first end of the second backflow prevention switch is electrically connected to the second end of the positive direct current bus and the first end of the first bypass circuit respectively, and a second end of the second backflow prevention switch is electrically connected to the first end of the second bypass circuit, or a first end of the second backflow prevention switch is electrically connected to the second end of the second bypass circuit, and a second end of the second backflow prevention switch is electrically connected to the second end of the isolation circuit and the second end of the first bypass circuit respectively, where after the second bypass circuit is connected, the second backflow prevention switch is configured to prevent the bus capacitor and the first photovoltaic module from being discharged by using the second bypass circuit. The second backflow prevention switch is a diode, the first end of the second backflow prevention switch is a cathode of the diode, and the second end of the second backflow prevention switch is an anode of the diode. Because the second backflow prevention switch is disposed, the second backflow prevention switch can prevent the bus capacitor from being discharged by using the second bypass circuit, and when the second bypass circuit is connected, the second backflow prevention switch can further prevent the first photovoltaic module, another second photovoltaic module, and the like from forming a current loop by using the second bypass circuit, thereby preventing a risk of damage caused by an excessively high current to the second bypass circuit.

Further, the first bypass circuit is a switch with three ends, and the switch is a relay, a contactor, a switch with a shunt trip winding, or a controllable semiconductor breaker.

Further, the isolation circuit is a breaker with three ends, and the breaker is a relay, a contactor, a switch with a shunt trip winding, or a controllable semiconductor breaker.

Further, the photovoltaic inverter further includes an auxiliary source supply unit, the auxiliary source supply unit is electrically connected to the drive control circuit, and the auxiliary source supply unit is configured to supply power to the drive control circuit.

According to a second aspect, the present invention provides a photovoltaic power generation system, including the foregoing photovoltaic inverter, where the photovoltaic power generation system further includes a first photovoltaic module, and the first photovoltaic module is electrically connected to the photovoltaic inverter.

### BRIEF DESCRIPTION OF DRAWINGS

To describe the technical solutions in this application more clearly, the following briefly describes the accompanying drawings used in describing the implementations. Apparently, the accompanying drawings in the following description show merely some implementations of this application, and a person of ordinary skill in the art may still derive other drawings from these accompanying drawings without creative efforts.

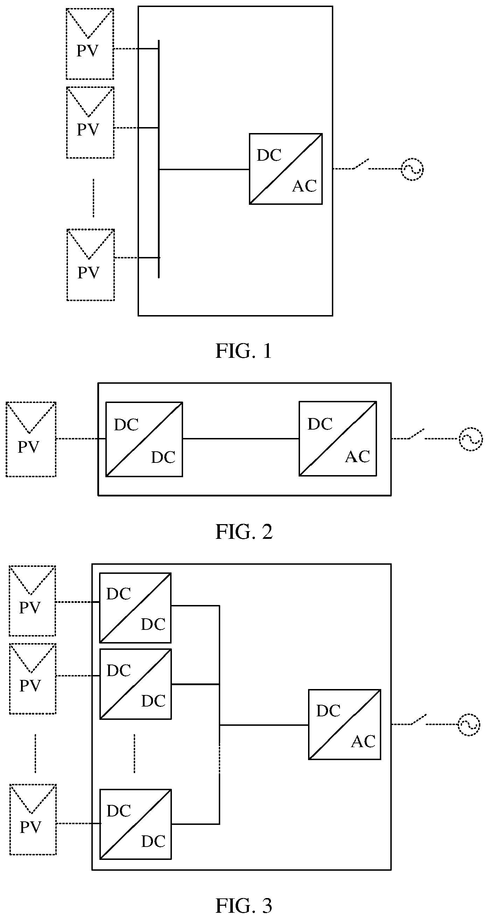

FIG. 1 is a schematic diagram of a single-stage photovoltaic inverter in the current technology;
FIG. 2 is a schematic diagram of a double-stage photovoltaic inverter in the current technology;
FIG. 3 is a schematic diagram of another double-stage photovoltaic inverter in the current technology;

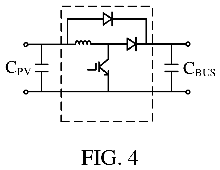

FIG. 4 is a specific circuit diagram of a DC/DC boost circuit in FIG. 2 and FIG. 3;

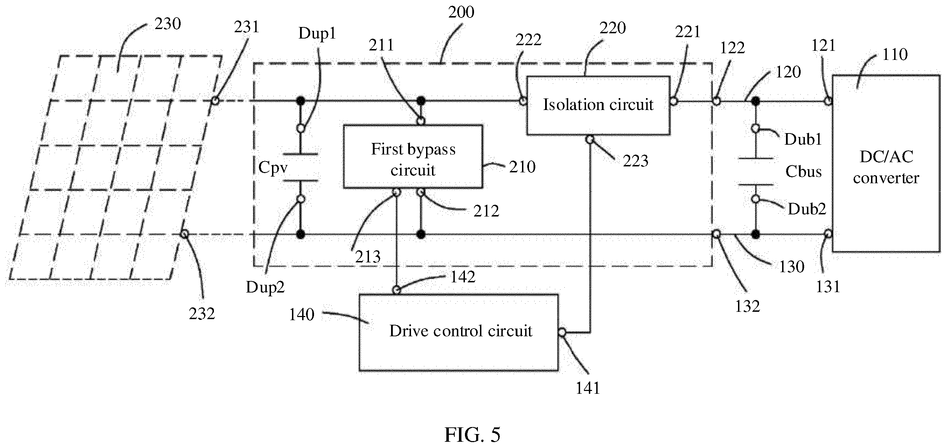

FIG. 5 is a schematic modular diagram of a photovoltaic inverter according to a first embodiment of this application;

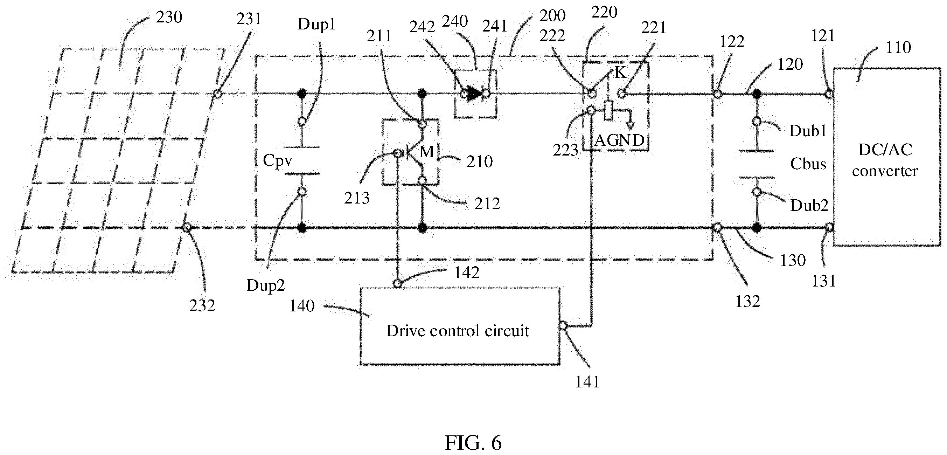

FIG. 6 is a partial circuit diagram of a photovoltaic inverter according to a first embodiment of this application;

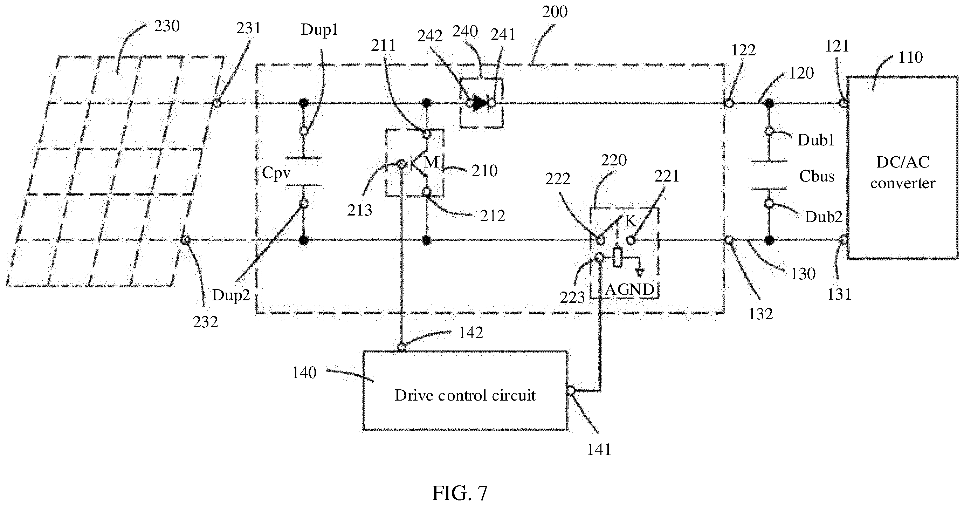

FIG. 7 is a schematic diagram of a photovoltaic inverter according to a second embodiment of this application;

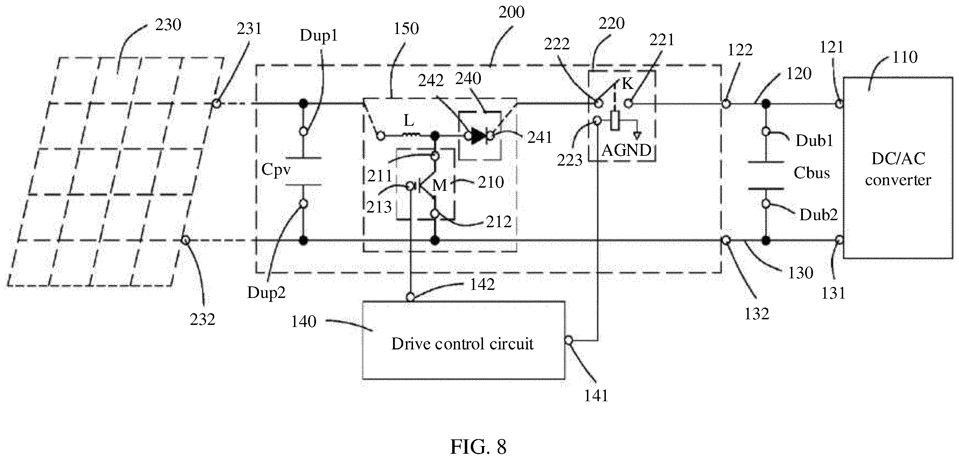

FIG. 8 is a schematic diagram of a photovoltaic inverter according to a third embodiment of this application;

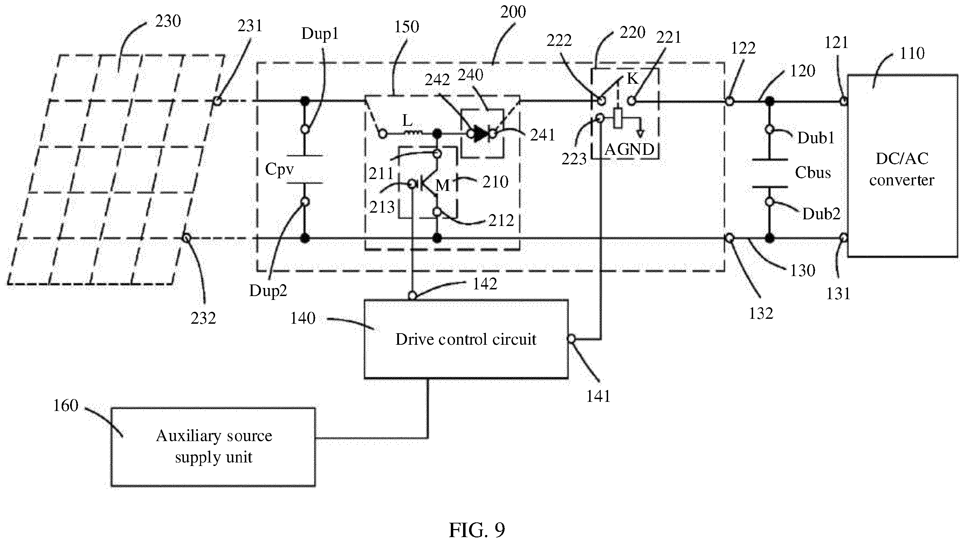

FIG. 9 is a schematic diagram of a photovoltaic inverter according to a fourth embodiment of this application;

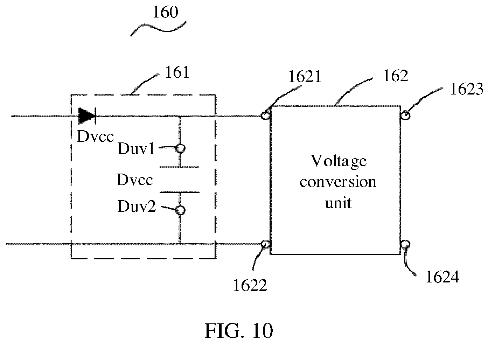

FIG. 10 is a schematic diagram of an auxiliary source supply unit in FIG. 9;

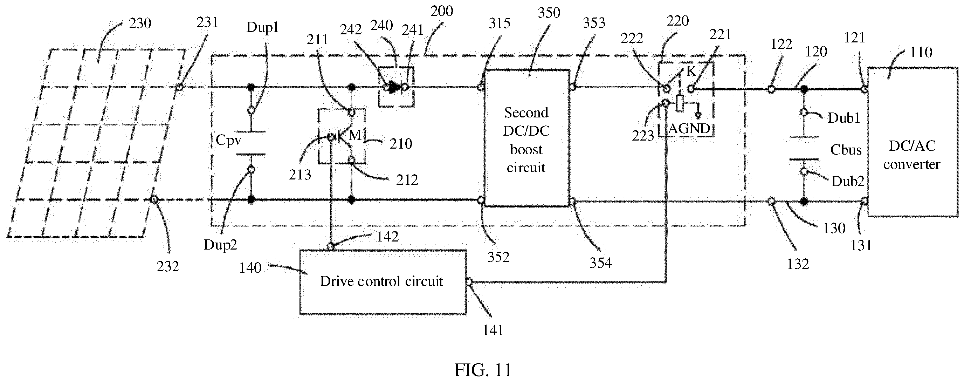

FIG. 11 is a schematic diagram of a photovoltaic inverter according to a fifth embodiment of this application;

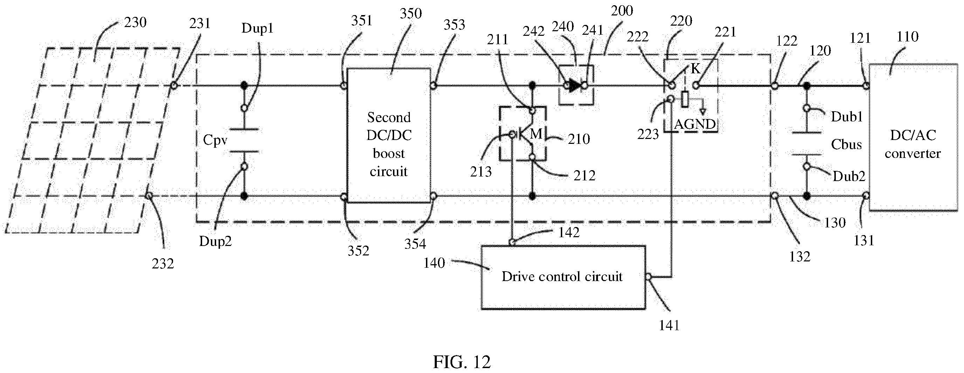

FIG. 12 is a schematic diagram of a photovoltaic inverter according to a sixth embodiment of this application;

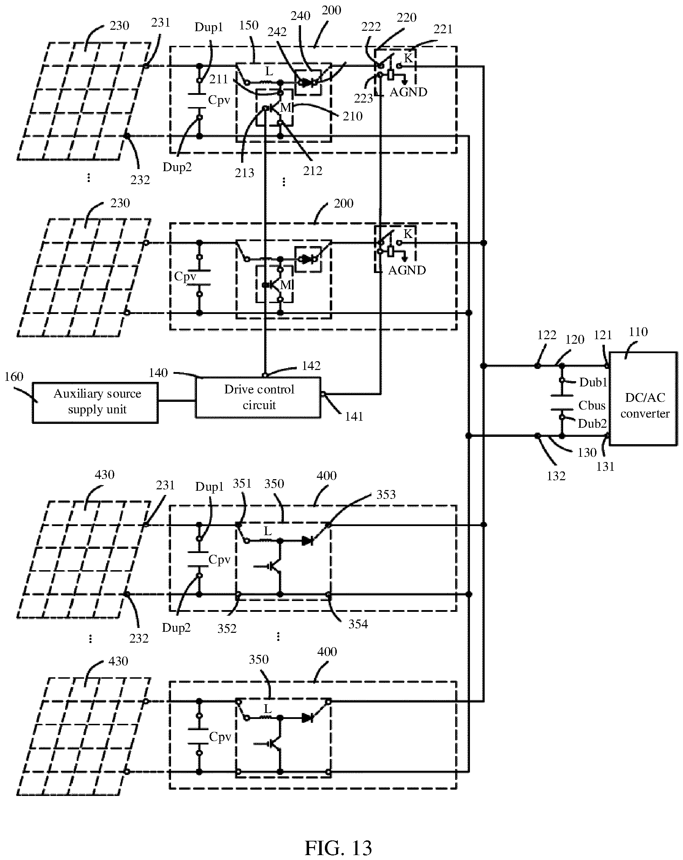

FIG. 13 is a schematic diagram of a photovoltaic inverter according to a seventh embodiment of this application;

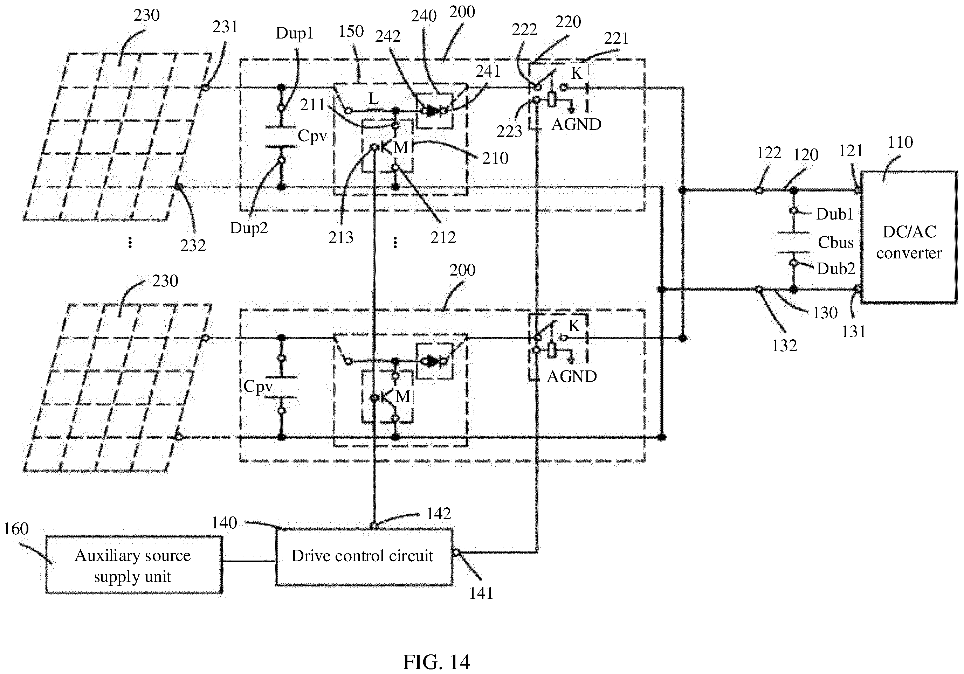

FIG. 14 is a schematic diagram of a photovoltaic inverter according to an eighth embodiment of this application;

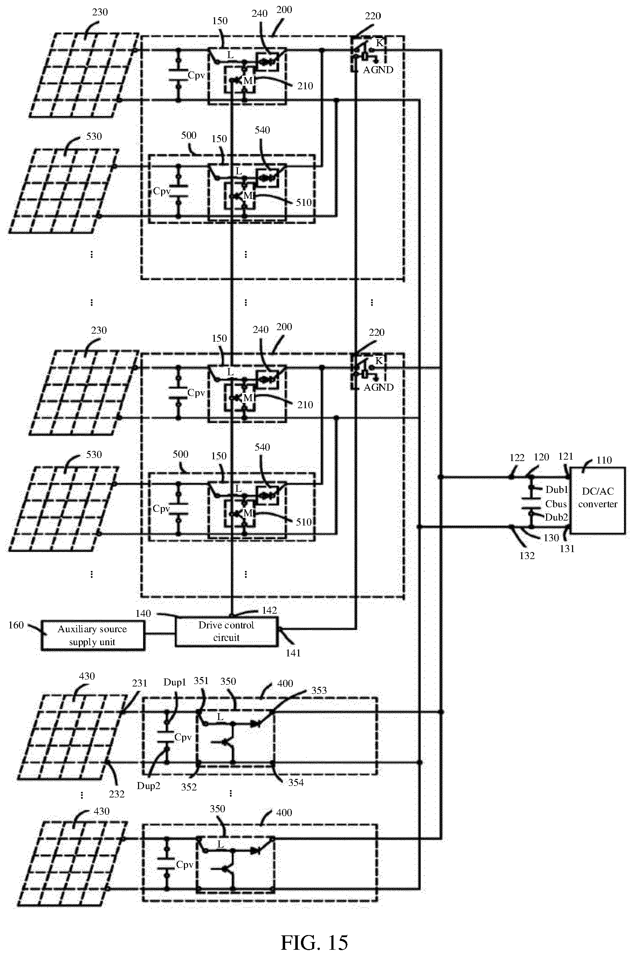

FIG. 15 is a schematic diagram of a photovoltaic inverter according to a ninth embodiment of this application;

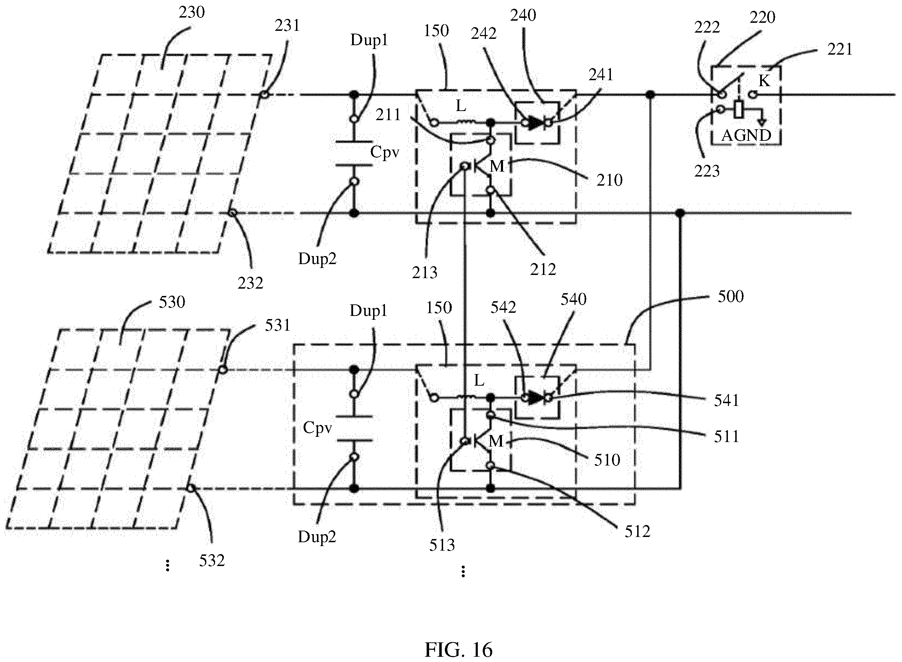

FIG. 16 is a schematic diagram of a first unit in FIG. 15;

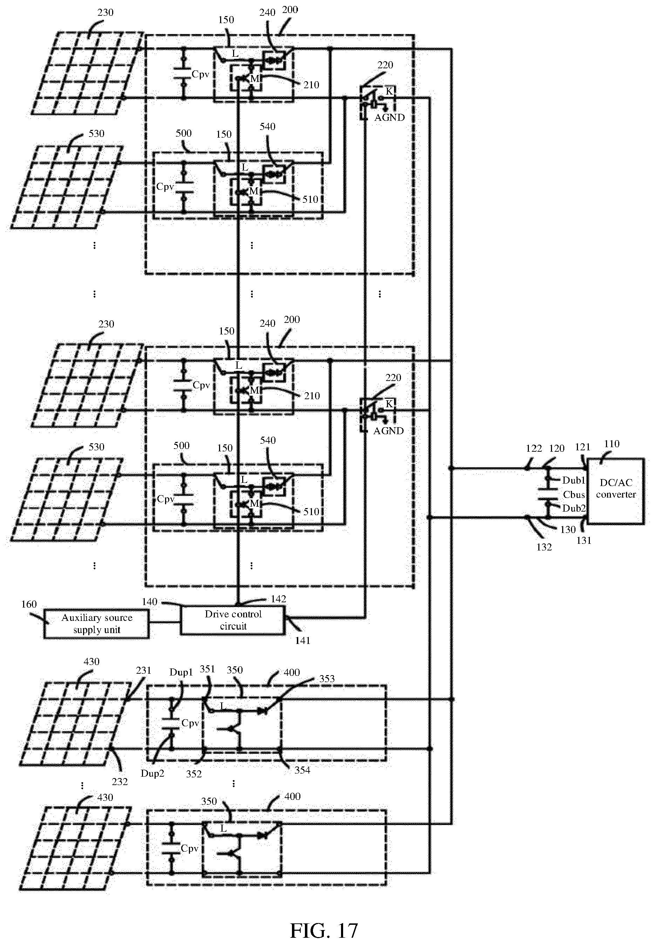

FIG. 17 is a schematic diagram of a photovoltaic inverter according to a tenth embodiment of this application;

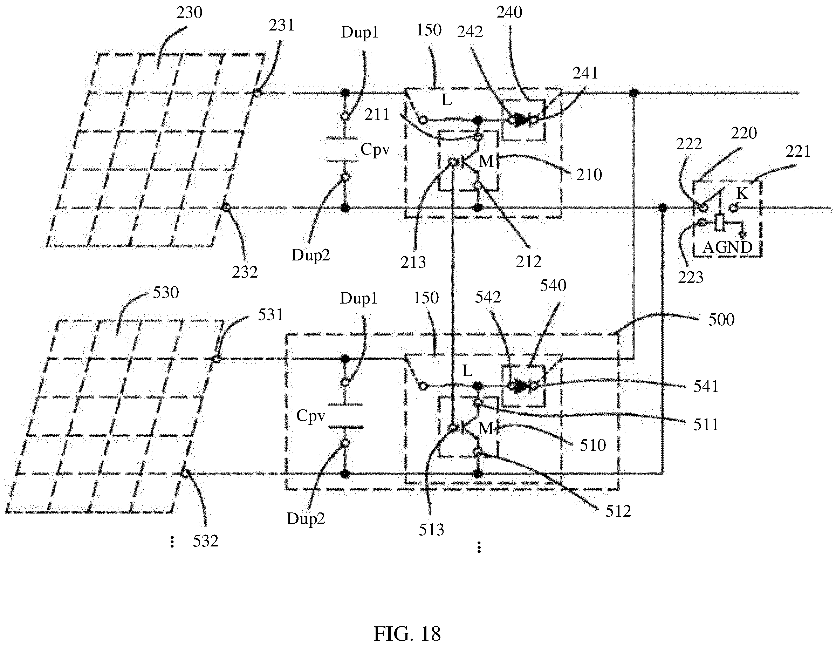

FIG. 18 is a schematic diagram of a first unit in FIG. 17; and

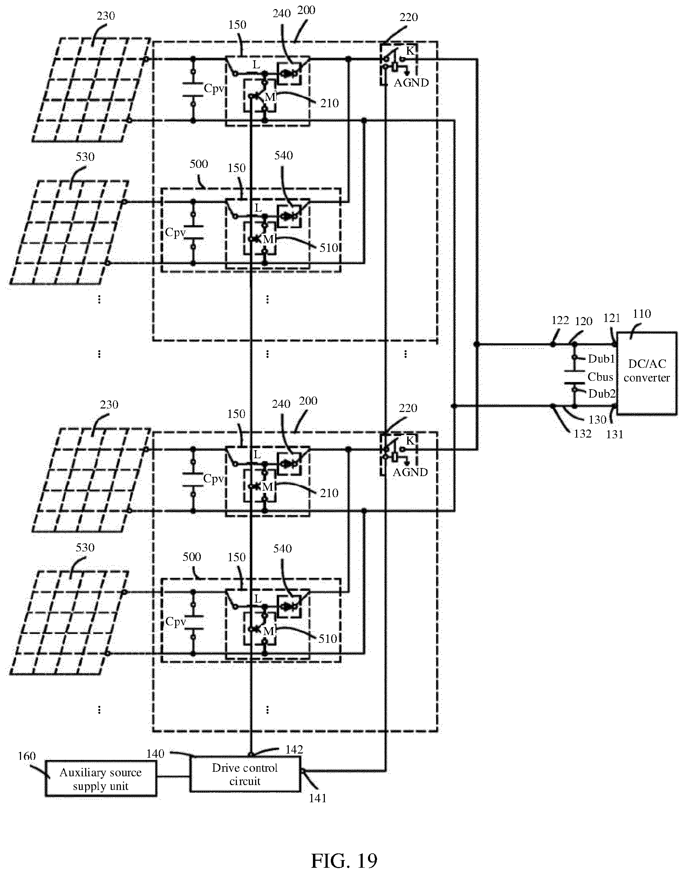

FIG. 19 is a schematic diagram of a photovoltaic inverter according to an eleventh embodiment of this application.

### Reference numerals:

110-DC/AC converter; 120-positive direct current bus; 121-first end; 122-second end; 130-negative direct current bus; 131-first end; 132-second end; 140-drive control circuit; 141-first end; 142-second end; Cbus-bus capacitor; Dub1-first end; Dub2-second end; Cpv-PV capacitor; Dup1-first end; Dup2-second end; 150-first DC/DC boost circuit; 160-auxiliary source supply unit; 161-voltage holding circuit; 162-voltage conversion unit; 1621-positive input end; 1622-negative input end; 1623-positive output end; 1624-negative output end; Dvcc-auxiliary source diode; Cvcc-auxiliary source capacitor; Duv1-first end; Duv2-second end;
200-first unit; 210-first bypass circuit; 211-first end; 212-second end; 213-third end; 220-isolation circuit; 221-first end; 222-second end; 223-third end; 230-first photovoltaic module; 231-positive output end; 232-negative output end; 240-first backflow prevention switch; 241-first end; 242-second end;
350-second DC/DC boost circuit; 351-positive input end; 352-negative input end; 353-positive output end; 354-negative output end;
400-third unit; 430-third photovoltaic module; 431-positive output end; 432-negative output end;
500-second unit; 510-second bypass circuit; 511-first end; 512-second end; 513-third end; 530-second photovoltaic module; 531-positive output end; 532-negative output end; 540-second backflow prevention switch; 541-first end; and 542- second end.

### DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

The embodiments of this application provide a photovoltaic inverter. The photovoltaic inverter is applied to a photovoltaic power generation system. The photovoltaic power generation system includes a first photovoltaic module and a photovoltaic inverter. The first photovoltaic module includes a positive output end and a negative output end. The positive output end and the negative output end of the first photovoltaic module are electrically connected to the photovoltaic inverter respectively. There may be one or more first photovoltaic modules electrically connected to the photovoltaic inverter. The first photovoltaic module converts solar energy into a direct current, and then converts the direct current into an alternating current by using the photovoltaic inverter. Then the alternating current may be incorporated into a power grid or provided to a load for use.

### First Embodiment

Referring to FIG. 5, a photovoltaic inverter is a single-stage photovoltaic inverter. The photovoltaic inverter includes a DC/AC converter 110, a positive direct current bus 120, a negative direct current bus 130, a drive control circuit 140, and a first unit 200. In addition, in another embodiment of this application, there may be a plurality of first units 200, for example, two, three, four, or more first units 200. In FIG. 5, the positive direct current bus 120 has two free ends, where a right end is a first end 121, and a left end is a second end 122; and the negative direct current bus 130 has two free ends, where a right end is a first end 131, and a left end is a second end 132. The first end 121 of the positive direct current bus 120 and the first end 131 of the negative direct current bus 130 are electrically connected to the DC/AC converter 110 respectively. Herein, the first end 121 of the positive direct current bus 120 and the first end 131 of the negative direct current bus 130 are directly electrically connected to the DC/AC converter 110. In this embodiment, a length of the positive direct current bus 120 and a length of the negative direct current bus 130 may be equal or unequal.

In this embodiment, the first unit 200 includes a first bypass circuit 210 and an isolation circuit 220. The isolation circuit 220 has at least three ends: a first end 221, a second end 222, and a third end 223. The first bypass circuit 210 has at least three ends: a first end 211, a second end 212, and a third end 213. The drive control circuit 140 has at least two ends: a first end 141 and a second end 142. The isolation circuit 220 and the third end 213 of the first bypass circuit 210 are control ends. The third end 223 of the isolation circuit 220 is configured to control whether the first end 221 and the second end 222 of the isolation circuit 220 are connected. The third end 213 of the first bypass circuit 210 is configured to control whether the first end 211 and the second end 212 of the first bypass circuit 210 are connected.

Optionally, in FIG. 5, the first end 221 of the isolation circuit 220 is electrically connected to the second end 122 of the positive direct current bus 120. Herein, the first end 221 of the isolation circuit 220 may be directly electrically connected to the second end 122 of the positive direct current bus 120, or may be indirectly electrically connected to the second end 122 of the positive direct current bus 120 by using another conducting wire. The second end 222 of the isolation circuit 220 is configured to electrically connect to a positive output end 231 of a first photovoltaic module 230. Specifically, the second end 222 of the isolation circuit 220 is electrically connected to the positive output end 231 of the first photovoltaic module 230 by using a conducting wire. The second end 132 of the negative direct current bus 130 is configured to electrically connect to a negative output end 232 of the first photovoltaic module 230. Herein, the second end 132 of the negative direct current bus 130 is electrically connected to the negative output end 232 of the first photovoltaic module 230 by using a conducting wire. In this embodiment, the first end 211 of the first bypass circuit 210 is electrically connected to the second end 222 of the isolation circuit 220, and the second end 212 of the first bypass circuit 210 is electrically connected to the second end 132 of the negative direct current bus 130.

In this embodiment, the first end 141 of the drive control circuit 140 is electrically connected to the third end 223 of the isolation circuit 220, and the second end 142 of the drive control circuit 140 is electrically connected to the third end 213 of the first bypass circuit 210. The drive control circuit 140 separately outputs signals by using the first end 141 and the second end 142 of the drive control circuit 140, where the outputs signals are used to control whether the first end 221 and the second end 222 of the isolation circuit 220 are connected, and whether the first end 211 and the second end 212 of the first bypass circuit 210 are connected. The drive control circuit 140 is configured to detect whether the positive direct current bus 120 and the negative direct current bus 130 are faulty. For example, components such as the DC/AC (direct current/alternating current) converter 110 and a bus capacitor Cbus (refer to the following description) are faulty, which causes the positive direct current bus 120 and the negative direct current bus 130 to be faulty. The fault may be, for example, a short-circuit fault on the positive direct current bus 120 and the negative direct current bus 130, an overvoltage fault on the positive direct current bus 120 and the negative direct current bus 130, or a voltage imbalance fault on the positive direct current bus 120 and the negative direct current bus 130. In this embodiment, that the drive control circuit 140 is configured to detect whether the positive direct current bus 120 and the negative direct current bus 130 are faulty is a conventional technology. For example, the drive control circuit 140 is connected to the positive direct current bus 120 and the negative direct current bus 130 to detect signals such as a voltage and a current to determine whether the positive direct current bus 120 and the negative direct current bus 130 are faulty. Details are not described herein again.

After the drive control circuit 140 detects that the positive direct current bus 120 and the negative direct current bus 130 are faulty, the drive control circuit 140 is configured to control the first end 211 and the second end 212 of the first bypass circuit 210 to be connected. In this case, the first photovoltaic module 230 and the first bypass circuit 210 form an electrical loop for shunting an original current, so that a current flowing through the isolation circuit 220 is less than or equal to a preset current, where the preset current is set by a worker based on an actual circuit condition. For example, the preset current is 0 A, 1 A, 2 A, or 3 A. The preset current is generally equal to 0 A or relatively close to 0 A. Further, the drive control circuit 140 is further configured to control the first end 221 and the second end 222 of the isolation circuit 220 to be disconnected, so that the first photovoltaic module 230 electrically connected to the second end 222 of the isolation circuit 220 and the positive connection bus electrically connected to the first end 221 of the isolation circuit 220 are disconnected. In addition, a time point at which the isolation circuit 220 is disconnected is later than a time point at which the first bypass circuit 210 is connected. Because a response time varies from component to component, in this embodiment, the drive control circuit 140 may simultaneously send signals to the third end 213 of the first bypass circuit 210 and the third end 223 of the isolation circuit 220 by using the second end 142 and the first end 141 respectively. Alternatively, the drive control circuit 140 may first send a signal to the first bypass circuit 210 and then send a signal to the isolation circuit 220, or vice versa. Regardless of a time point at which the signal is sent, it is necessary to ensure that the time point at which the first end 221 and the second end 222 of the isolation circuit 220 are disconnected is later than the time point at which the first end 211 and the second end 212 of the first bypass circuit 210 are connected.

In this embodiment, the drive control circuit 140 and the isolation circuit 220 are disposed, the first end 221 of the isolation circuit 220 is electrically connected to the second end 122 of the positive direct current bus 120, and the second end 222 of the isolation circuit 220 is electrically connected to the positive output end 231 of the first photovoltaic module 230. When the drive control circuit 140 detects that the positive direct current bus 120 and the negative direct current bus 130 are faulty, the drive control circuit 140 is configured to control the first end 221 and the second end 222 of the isolation circuit 220 to be disconnected, so that the first photovoltaic module 230 is disconnected from the positive direct current bus 120. Therefore, the first photovoltaic module 230 electrically connected to the second end 222 of the isolation circuit 220 cannot continue to transfer energy to a faulty point, and further spreading of the faulty point can be prevented.

Further, because the first bypass circuit 210 is disposed, after the drive control circuit 140 detects that the positive direct current bus 120 and the negative direct current bus 130 are faulty, the drive control circuit 140 is configured to control the first end 211 and the second end 212 of the first bypass circuit 210 to be connected, so that the current flowing through the first end 221 and the second end 222 of the isolation circuit 220 is less than or equal to the preset current, and the drive control circuit 140 is configured to control the first end 221 and the second end 222 of the isolation circuit 220 to be disconnected, so that the first photovoltaic module 230 is disconnected from the positive direct current bus 120. In addition, the time point at which the isolation circuit 220 is disconnected is later than the time point at which the first bypass circuit 210 is connected. An advantage of this disposition is that the current flowing through the isolation circuit 220 is relatively low when the first end 221 and the second end 222 of the isolation circuit 220 are disconnected. This provides a condition for low-current disconnection of the first end 221 and the second end 222 of the isolation circuit 220, avoids a voltage surge or arcing generated when the first end 221 and the second end 222 of the isolation circuit 220 are directly disconnected, and can prevent the isolation circuit 220 from being damaged by a high voltage generated when the isolation circuit 220 is directly disconnected. In this application, thanks to disposition of the first bypass circuit 210 and the isolation circuit 220, when the isolation circuit 220 is disconnected, the current flowing through the isolation circuit 220 is relatively low, there is a relatively low requirement on a high-current disconnection capability of the isolation circuit 220, and costs are also relatively low.

Referring to FIG. 5 and FIG. 6, optionally, in this embodiment, the first bypass circuit 210 is a switch M having three ends. In this embodiment, the switch M is a normally open switch, that is, the first end 211 and the second end 212 of the switch M are open when the switch M is not energized. However, this application is not limited thereto. In another embodiment of this application, the switch M may alternatively be a normally closed switch, that is, when the switch M is not energized, the first end 211 and the second end 212 of the switch M are connected and closed. The switch M is, for example, a relay, a contactor, a switch with a shunt trip winding, or a controllable semiconductor breaker. The controllable semiconductor breaker is, for example, a MOS transistor (metal oxide semiconductor, metal oxide semiconductor field effect transistor), an IGBT (Insulated Gate Bipolar Transistor, insulated gate bipolar transistor), or an IGCT (Integrated Gate Commutated Thyristors, integrated gate commutated thyristor). In FIG. 6, the switch M is an IGBT, and costs of the IGBT are relatively low. A first end 211 of the switch M is a collector electrode, a second end 212 of the switch M is an emitter electrode, and a third end 213 of the switch M is a gate electrode.

Optionally, in this embodiment, the isolation circuit 220 is a breaker K having three ends. Herein, the breaker K is a normally open breaker, that is, when the isolation circuit 220 is not energized, the first end 221 and the second end 222 of the isolation circuit 220 are disconnected. However, this application is not limited thereto. In another embodiment of this application, the breaker K may alternatively be a normally closed breaker. The breaker K is, for example, a relay, a contactor, a switch with a shunt trip winding, or a controllable semiconductor breaker. The controllable semiconductor breaker is, for example, a MOS transistor, an IGBT, or an IGCT. In FIG. 6, the breaker K is a relay. The relay can implement a good breaking function, featuring a low cost and stable breaking. A third end 223 of the breaker K is a control end.

In this embodiment, the photovoltaic inverter further includes a bus (bus) capacitor Cbus and a PV capacitor Cpv (photovoltaic capacitor). PV (photovoltaics) represents photovoltaics. A first end Dup1 of the PV capacitor Cpv is electrically connected to the positive output end 231 of the first photovoltaic module 230, the first end 211 of the first bypass circuit 210, and a second end 222 of a first isolation circuit 220 respectively. A second end Dup2 of the PV capacitor Cpv is electrically connected to the negative output end 232 of the first photovoltaic module 230, the second end 212 of the first bypass circuit 210, and the second end 132 of the negative direct current bus 130 respectively. A first end Dub1 and a second end Dub2 of the bus capacitor Cbus are electrically connected to the positive direct current bus 120 and the negative direct current bus 130 respectively.

Referring to FIG. 6, the first unit 200 further includes a first backflow prevention switch 240 Herein, a first end 241 of the first backflow prevention switch 240 is electrically connected to the second end 222 of the isolation circuit 220, and a second end 242 of the first backflow prevention switch 240 is electrically connected to the first end 211 of the first bypass circuit 210. That is, the first backflow prevention switch 240 is located between the isolation circuit 220 and the first bypass circuit 210. However, this application is not limited thereto. In another embodiment of this application, the first end 241 of the first backflow prevention switch 240 is electrically connected to the second end 122 of the positive direct current bus 120, and the second end 242 of the first backflow prevention switch 240 is electrically connected to the first end 221 of the isolation circuit 220. In another embodiment of this application, the first end 241 of the first backflow prevention switch 240 is electrically connected to the second end 212 of the first bypass circuit 210, and the second end 242 of the first backflow prevention switch 240 is electrically connected to the second end 132 of the negative direct current bus 130. In addition, after the first bypass circuit 210 is connected, the first backflow prevention switch 240 prevents the bus capacitor Cbus from being discharged by using the first bypass circuit 210. Specifically, in this embodiment, the first backflow prevention switch 240 is a diode, the first end 241 of the first backflow prevention switch 240 is a cathode of the diode, and the second end 242 of the first backflow prevention switch 240 is an anode of the diode. Therefore, when the first bypass circuit 210 is connected, the first backflow prevention switch 240 can prevent the bus capacitor Cbus from being discharged by using the first bypass circuit 210.

In this embodiment, the drive control circuit 140 is, for example, a microprocessor or a control chip, and details are not described herein again. The positive direct current bus 120 and the negative direct current bus 130 include conducting wires.

In this embodiment, after the positive direct current bus 120 and the negative direct current bus 130 are faulty, the drive control circuit 140 controls the first end 211 and the second end 212 of the first bypass circuit 210 to be connected, and controls the first end 221 and the second end 222 of the isolation circuit 220 to be disconnected, so that after the first photovoltaic module 230 is disconnected from the positive direct current bus 120, the drive control circuit 140 can further control the first end 211 and the second end 212 of the first bypass circuit 210 to be disconnected. In this way, the first photovoltaic module 230 no longer forms a loop by using the first bypass circuit 210, and no longer transfers energy to the photovoltaic inverter. In addition, in another embodiment of this application, the drive control circuit 140 may alternatively ignore the first bypass circuit 210. In this way, the drive control circuit 140 continues to control the first end 211 and the second end 212 of the first bypass circuit 210 to be connected. However, after a period of time when the drive control circuit 140 is not powered, because the first bypass circuit 210 is a normally open switch, the first bypass circuit 210 is automatically disconnected. In another embodiment of this application, when the drive control circuit 140 is continuously powered, the drive control circuit 140 may continue to control the first bypass circuit 210 to be connected. Because energy of the first photovoltaic module 230 is not transferred to the positive direct current bus 120 and the negative direct current bus 130, even if the first bypass circuit 210 is continuously connected, the case is still acceptable, the fault at the faulty point does not spread, and impact on the entire photovoltaic inverter is limited.

In this embodiment, when no fault occurs and the photovoltaic inverter is normally powered on and started, because the isolation circuit 220 is a normally open breaker, the DC/AC converter 110 is not powered by the first photovoltaic module 230 at first. In this case, the drive control circuit 140 controls the first bypass circuit 210 so that a voltage difference between two ends of the isolation circuit 220 is less than or equal to a preset voltage. The preset voltage is set by a worker based on an actual circuit condition. For example, the preset voltage is 40 V, 30 V, 20 V, 10 V, or 0 V Specifically, the first bypass circuit 210 is intermittently connected. For example, a PMW (pulse-width modulation) signal is provided to the control end of the switch M, and the switch M is intermittently connected, that is, the first end 211 and the second end 212 of the switch M are connected and disconnected from time to time. A voltage at the second end 222 of the isolation circuit 220 may be reduced to a voltage value by adjusting a duty cycle of the PWM signal. When the photovoltaic inverter is just powered on, a voltage at the first end 221 of the isolation circuit 220 is relatively stable, for example, 0 V or a voltage value. Therefore, the drive control circuit 140 controls the first bypass circuit 210 so that the voltage difference between the two ends of the isolation circuit 220 is less than or equal to the preset voltage. In addition, the drive control circuit 140 further controls the first end 221 and the second end 222 of the isolation circuit 220 to be connected, so that the first photovoltaic module 230 is connected to the positive direct current bus 120 and the negative direct current bus 130 respectively, where a time point at which the isolation circuit 220 is connected is later than a time point at which the voltage difference between the first end 221 and the second end 222 of the isolation circuit 220 is less than or equal to the preset voltage. After the isolation circuit 220 is connected, the drive control circuit 140 controls the first end 211 and the second end 212 of the first bypass circuit 210 to be disconnected to complete starting of the photovoltaic inverter, so that the first photovoltaic module 230 supplies power to the DC/AC converter 110. This manner is soft starting of the photovoltaic inverter. This disposition can avoid the following problems that occur when the isolation circuit 220 is directly connected: If the first bypass circuit 210 is not disposed or the first bypass circuit 210 is not controlled, but the isolation circuit 220 is directly connected, the PV capacitor Cpv and the bus capacitor Cbus are directly connected. Because the PV capacitor Cpv is generally fully charged, but the bus capacitor Cbus is not charged, a high current is generated at a moment when the isolation circuit 220 is connected. Because a line between the bus capacitor Cbus and the PV capacitor Cpv, the PV capacitor Cpv, or the bus capacitor Cbus has an upper limit for a withstand current, the lines or components may be damaged. By using soft starting in this application, the foregoing problem that the isolation circuit 220 is directly connected can be resolved, and lines and components such as the PV capacitor Cpv and the bus capacitor Cbus are not damaged when the photovoltaic inverter is normally started. In addition, after the isolation circuit 220 is connected, the drive control circuit 140 controls the first bypass circuit 210 to be disconnected. Therefore, the first photovoltaic module 230 forms a loop by using components such as the isolation circuit 220 and the DC/AC converter 110, and the drive control circuit 140 can control the first bypass circuit 210 to be smoothly and safely disconnected.

### Second Embodiment

FIG. 7 is a schematic diagram of the second embodiment of this application. The schematic diagram of FIG. 7 is similar to the schematic diagram of FIG. 6. A main difference between this embodiment and the second embodiment is a location of an isolation circuit 220.

Referring to FIG. 7, in this embodiment, a first end 121 of a positive direct current bus 120 and a first end 131 of a negative direct current bus 130 are electrically connected to an DC/AC converter 110 respectively.

Optionally, a first end 221 of the isolation circuit 220 is electrically connected to a second end 132 of the negative direct current bus 130. Herein, the first end 221 of the isolation circuit 220 may be directly electrically connected to the second end 132 of the negative direct current bus 130, or may be indirectly electrically connected to the second end 132 of the negative direct current bus 130 by using another conducting wire. A second end 222 of the isolation circuit 220 is configured to electrically connect to a negative output end 232 of a first photovoltaic module 230. Specifically, the second end 222 of the isolation circuit 220 is electrically connected to the negative output end 232 of the first photovoltaic module 230 by using a conducting wire. A second end 122 of the positive direct current bus 120 is configured to electrically connect to a positive output end 231 of the first photovoltaic module 230. Herein, the second end 122 of the positive direct current bus 120 is electrically connected to the positive output end 231 of the first photovoltaic module 230 by using a conducting wire. In this embodiment, a first end 211 of a first bypass circuit 210 is electrically connected to the second end 122 of the positive direct current bus 120, and a second end 212 of the first bypass circuit 210 is electrically connected to the second end 222 of the isolation circuit 220.

In this embodiment, a first end 141 of a drive control circuit 140 is electrically connected to a third end 223 of the isolation circuit 220, and a second end 142 of the drive control circuit 140 is electrically connected to a third end 213 of the first bypass circuit 210. The drive control circuit 140 separately outputs signals by using the first end 141 and the second end 142 of the drive control circuit 140, where the outputs signals are used to control whether the first end 221 and the second end 222 of the isolation circuit 220 are connected, and whether the first end 211 and the second end 212 of the first bypass circuit 210 are connected. The drive control circuit 140 detects whether the positive direct current bus 120 and the negative direct current bus 130 are faulty. For example, components such as the DC/AC (direct current/alternating current) converter 110 and a bus capacitor Cbus are faulty, which causes the positive direct current bus 120 and the negative direct current bus 130 to be faulty. The fault may be, for example, a short-circuit fault on the positive direct current bus 120 and the negative direct current bus 130, an overvoltage fault on the positive direct current bus 120 and the negative direct current bus 130, or a voltage imbalance fault on the positive direct current bus 120 and the negative direct current bus 130.

After the drive control circuit 140 detects that the positive direct current bus 120 and the negative direct current bus 130 are faulty, the drive control circuit 140 is configured to control the first bypass circuit 210 to be connected. In this case, the first photovoltaic module 230 and the first bypass circuit 210 form an electrical loop, so that a current flowing through the isolation circuit 220 is less than or equal to a preset current. Further, the drive control circuit 140 is further configured to control the first end 221 and the second end 222 of the isolation circuit 220 to be disconnected, so that the first photovoltaic module 230 electrically connected to the second end 222 of the isolation circuit 220 and the negative connection bus electrically connected to the first end of the isolation circuit 220 are disconnected. In addition, a time point at which the isolation circuit 220 is disconnected is later than a time point at which the first bypass circuit 210 is connected.

In this embodiment, the drive control circuit 140 and the isolation circuit 220 are disposed, the first end 221 of the isolation circuit 220 is electrically connected to the second end 132 of the negative direct current bus 130, and the second end 222 of the isolation circuit 220 is electrically connected to the negative output of the first photovoltaic module 230. When the drive control circuit 140 detects that the positive direct current bus 120 and the negative direct current bus 130 are faulty, the drive control circuit 140 is configured to control the isolation circuit 220 to be disconnected, so that the first photovoltaic module 230 is disconnected from the negative direct current bus 130. Therefore, the first photovoltaic module 230 electrically connected to the second end 222 of the isolation circuit 220 cannot continue to transfer energy to a faulty point, and further spreading of the faulty point can be prevented.

Further, because the first bypass circuit 210 is disposed, after the drive control circuit 140 detects that the positive direct current bus 120 and the negative direct current bus 130 are faulty, the drive control circuit 140 is configured to control the first bypass circuit 210 to be connected, so that the current flowing through the isolation circuit 220 is less than or equal to the preset current, and the drive control circuit 140 is configured to control the isolation circuit 220 to be disconnected, so that the first photovoltaic module 230 is disconnected from the negative direct current bus 130. In addition, the time point at which the isolation circuit 220 is disconnected is later than the time point at which the first bypass circuit 210 is connected. An advantage of this disposition is that the current flowing through the isolation circuit 220 is relatively low when the first end 221 and the second end 222 of the isolation circuit 220 are disconnected. This provides a condition for low-current disconnection of the isolation circuit 220, avoids a voltage surge or arcing generated when the isolation circuit 220 is directly disconnected, and can prevent the isolation circuit 220 from being damaged by a high voltage generated when the isolation circuit 220 is directly disconnected. In this application, thanks to disposition of the first bypass circuit 210 and the isolation circuit 220, when the isolation circuit 220 is disconnected, the current flowing through the isolation circuit 220 is relatively low, there is a relatively low requirement on a high-current disconnection capability of the isolation circuit 220, and costs are also relatively low.

In this embodiment, the photovoltaic inverter further includes a bus (bus) capacitor and a PV capacitor Cpv (photovoltaic capacitor). For a specific connection mode, refer to the first embodiment.

Still referring to FIG. 7, in this embodiment, the first unit 200 further includes a first backflow prevention switch 240. Herein, a first end 241 of the first backflow prevention switch 240 is electrically connected to the second end 122 of the positive direct current bus 120, and a second end 242 of the first backflow prevention switch 240 is electrically connected to the first end 211 of the first bypass circuit 210, that is, the first backflow prevention switch 240 is located between the bus capacitor Cbus and the first bypass circuit 210. However, this application is not limited thereto. In another embodiment of this application, the first end 241 of the first backflow prevention switch 240 is electrically connected to the second end 212 of the first bypass circuit 210, and the second end 242 of the first backflow prevention switch 240 is electrically connected to the second end 222 of the isolation circuit 220. In another embodiment of this application, the first end 241 of the first backflow prevention switch 240 is electrically connected to the first end 221 of the isolation circuit 220, and the second end 242 of the first backflow prevention switch 240 is electrically connected to the second end 132 of the negative direct current bus 130. In addition, after the first bypass circuit 210 is connected, the first backflow prevention switch 240 prevents the bus capacitor Cbus from being discharged by using the first bypass circuit 210. Specifically, in this embodiment, the first backflow prevention switch 240 is a diode, the first end 241 of the first backflow prevention switch 240 is a cathode of the diode, and the second end 242 of the first backflow prevention switch 240 is an anode of the diode. Therefore, when the first bypass circuit 210 is connected, the first backflow prevention switch 240 can prevent the bus capacitor Cbus from being discharged by using the first bypass circuit 210.

### Third Embodiment

FIG. 8 is a schematic diagram of the third embodiment of this application. The schematic diagram of FIG. 8 is similar to the schematic diagram of FIG. 6. A main difference between this embodiment and the first embodiment is that a first unit 200 further includes a first DC/DC (direct current/direct current) boost circuit.

Referring to FIG. 8, a photovoltaic inverter is a two-stage photovoltaic inverter, and a first unit further includes a first DC/DC boost circuit 150. Disposition of the first DC/DC boost circuit 150 can help the photovoltaic inverter obtain a wider voltage range and a wider MPPT voltage range. In this embodiment, the first DC/DC boost circuit 150 is a boost circuit. However, this application is not limited thereto. In another embodiment of this application, the first DC/DC boost circuit 150 may alternatively be another boost circuit. FIG. 8 is a schematic diagram of a partial implementation circuit of a boost circuit. However, this application is not limited thereto. In another embodiment of this application, the boost circuit may alternatively have another circuit implementation form.

In this embodiment, the first DC/DC boost circuit 150 includes a switch M, that is, in this embodiment, a first bypass circuit 210 shares the switch M with the first DC/DC boost circuit 150. Because the first DC/DC boost circuit 150 is a common component in the photovoltaic inverter, in this embodiment of this application, no switch M needs to be additionally added for disposition of the first bypass circuit 210. Therefore, costs can be reduced. In this embodiment, the first DC/DC boost circuit 150 further includes an inductor L, one end of the inductor L is configured to electrically connect to a positive output end 231 of a first photovoltaic module 230, another component may exist between the inductor L and the positive output end, and another end of the inductor L is electrically connected to a first end 211 of the first bypass circuit 210 and a second end 222 of an isolation circuit 220 respectively. In this embodiment, the first DC/DC boost circuit 150 further includes a diode. In this embodiment, a first backflow prevention switch 240 shares the diode with the first DC/DC boost circuit 150, and no additional diode is required. Another component may also exist between a cathode of the diode and the second end 222 of the isolation circuit 220.

In this embodiment, because the first bypass circuit 210 shares the switch M with the first DC/DC boost circuit 150, no additional switch M needs to be added to the first bypass circuit 210. Therefore, costs can be reduced while a wider voltage range is obtained. In addition, in this embodiment, because the inductor L exists, and a time point at which the isolation circuit 220 is disconnected is later than a time point at which the first bypass circuit 210 is connected, a problem that damage of other components such as breakdown of the isolation circuit 220 is caused by a very high voltage generated by the inductor L when the isolation circuit 220 is directly disconnected can be avoided. In this embodiment, because the first bypass circuit 210 and the isolation circuit 220 are designed together, a problem that the inductor generates a very high voltage when the isolation circuit 220 is disconnected does not occur, a requirement on voltage withstand of the isolation circuit 220 is not high, and costs are relatively low.

### Fourth Embodiment

FIG. 9 is a schematic diagram of the fourth embodiment of this application. The schematic diagram of FIG. 9 is similar to the schematic diagram of FIG. 8. A main difference between this embodiment and the third embodiment is that a photovoltaic inverter further includes an auxiliary source supply unit 160.

Referring to FIG. 9, the photovoltaic inverter further includes the auxiliary source supply unit 160, the auxiliary source supply unit 160 is electrically connected to a drive control circuit 140, and the auxiliary source supply unit 160 is configured to supply power to the drive control circuit 140, so that the drive control circuit 140 works normally.

Referring to FIG. 9 and FIG. 10, in this embodiment, the auxiliary source supply unit 160 includes a voltage holding circuit 161 and a voltage conversion unit 162. The voltage conversion unit 162 is located between the voltage holding circuit 161 and the drive control circuit 140. Specifically, in this embodiment, the voltage holding circuit 161 is electrically connected to a positive direct current bus 120 and a negative direct current bus 130 respectively, the voltage conversion unit 162 is electrically connected to the voltage holding circuit 161, and the drive control circuit 140 is electrically connected to the voltage conversion unit 162. In addition, in another embodiment of this application, the voltage holding circuit 161 may be further electrically connected to a positive output end 231 and a negative output end 232 of a first photovoltaic module 230 directly or in other indirect modes. In this embodiment, when the positive direct current bus 120 and the negative direct current bus 130 supply power normally, a voltage transferred by the positive direct current bus 120 and the negative direct current bus 130 reaches the voltage conversion unit 162 through the voltage holding circuit 161. The voltage conversion unit 162 converts the voltage into a predetermined power supply voltage and supplies the voltage to the drive control circuit 140. When the first photovoltaic module 230 cannot supply power to the voltage holding circuit 161 because the positive direct current bus 120 and the negative direct current bus 130 are faulty, the voltage holding circuit 161 itself may continue to supply power for a period of time, and transfer the power to the voltage conversion unit 162. The voltage conversion unit 162 converts the voltage into a predetermined power supply voltage and supplies the voltage to the drive control circuit 140.

Specifically, referring to FIG. 10, in this embodiment, the voltage holding circuit 161 includes an auxiliary source diode Dvcc and an auxiliary source capacitor Cvcc. An anode of the auxiliary source diode Dvcc is electrically connected to the positive direct current bus 120. A cathode of the auxiliary source diode Dvcc is electrically connected to a first end Duv1 of the auxiliary source capacitor Cvcc and a positive input end 1621 of the voltage conversion unit 162 respectively. A second end Duv2 of the auxiliary source capacitor Cvcc is electrically connected to the negative direct current bus 130 and a negative input end 1622 of the voltage conversion unit 162 respectively. In addition, in another embodiment of this application, the anode of the auxiliary source diode Dvcc may alternatively not be electrically connected to the positive direct current bus 120, but is electrically connected to a first end 221 or a second end of an isolation circuit 220 or the positive output end 231 of the first photovoltaic module 230. The second end Duv2 of the auxiliary source capacitor Cvcc is electrically connected to a second end 212 of a first bypass circuit 210 or the negative output end 232 of the first photovoltaic module 230. In addition, the second end Duv2 of the auxiliary source capacitor Cvcc is further electrically connected to the negative input end 1622 of the voltage conversion unit 162. A positive output end 1623 and a negative output end 1624 of the voltage conversion unit 162 are electrically connected to the drive control circuit 140 respectively. When the first photovoltaic module 230 cannot supply power to the voltage holding circuit 161 because the positive direct current bus 120 and the negative direct current bus 130 are faulty, the fully charged auxiliary source capacitor Cvcc may be discharged. Because the auxiliary source diode Dvcc exists, the auxiliary source capacitor Cvcc is not discharged to the positive direct current bus 120 and the negative direct current bus 130, and the auxiliary source capacitor Cvcc may be discharged to the voltage conversion unit 162. In this embodiment, the voltage conversion unit 162 is a conventional circuit that can convert a voltage, for example, a buck circuit or a flyback circuit. Details are not described herein again.

In this embodiment, because the auxiliary source supply unit 160 is disposed, and the auxiliary source supply unit 160 is electrically connected to the drive control circuit 140, the auxiliary source supply unit 160 can supply power to the drive control circuit 140 regardless of whether the positive direct current bus 120 and the negative direct current bus 130 are faulty. The drive control circuit 140 can work normally, and the drive control circuit 140 can normally control the first bypass circuit 210 and the isolation circuit 220.

In this embodiment, when the drive control circuit 140 detects that the positive direct current bus 120 and the negative direct current bus 130 are faulty, even if the first photovoltaic module 230 cannot supply power to the voltage holding circuit 161, the fully charged auxiliary source capacitor Cvcc may continue to supply power to the voltage conversion unit 162. Therefore, the drive control circuit 140 may continue to obtain power. The drive control circuit 140 may control the first bypass circuit 210 to be connected, so that a current flowing through the isolation circuit 220 is equal to or less than a preset current, and the drive control circuit 140 may control the isolation circuit 220 to be disconnected, so that the first photovoltaic module 230 is disconnected from the positive direct current bus 120. In addition, a time point at which the isolation circuit 220 is disconnected is later than a time point at which the first bypass circuit 210 is connected. After charge stored in the auxiliary source capacitor Cvcc is completely released, the drive control circuit 140 does not control the first bypass circuit 210 and the isolation circuit 220 any longer because there is no power supply. The first bypass circuit 210 is a normally open switch M having three ends. The isolation circuit 220 is a normally open breaker K having three ends. Therefore, the first bypass circuit 210 is automatically disconnected, the isolation circuit 220 remains in a disconnected state, and the first photovoltaic module 230 does not form a loop subsequently by using the first bypass circuit 210. This disposition helps improve safety of the photovoltaic inverter.

In addition, in another embodiment of this application, the auxiliary power providing unit 160 may alternatively be a common direct current power supply, for example, an apparatus that can directly provide a power supply such as a battery power supply. In this case, the auxiliary source supply unit 160 does not need to be electrically connected to the positive direct current bus 120 and the negative direct current bus 130, or to the first photovoltaic module 230. In this case, the auxiliary source supply unit 160 does not supply power by using the first photovoltaic module 230.

### Fifth Embodiment

FIG. 11 is a schematic diagram of the fifth embodiment of this application. The schematic diagram of FIG. 11 is similar to the schematic diagram of FIG. 6. A main difference between this embodiment and the first embodiment is that a first unit further includes a second DC/DC boost circuit 350.

Referring to FIG. 11, a photovoltaic inverter is a two-stage photovoltaic inverter, and the photovoltaic inverter further includes a second DC/DC boost circuit 350. Disposition of the second DC/DC boost circuit 350 can help the photovoltaic inverter obtain a wider voltage range and a wider MPPT voltage range. In this embodiment, a positive input end 351 of the second DC/DC boost circuit 350 is electrically connected to a first end 241 of a first backflow prevention switch 240. A negative input end 352 of the second DC/DC boost circuit 350 is electrically connected to a second end 212 of a first bypass circuit 210. A positive output end 353 of the second DC/DC boost circuit 350 is electrically connected to a second end 122 of a positive direct current bus 120. A negative output end 354 of the second DC/DC boost circuit 350 is electrically connected to a second end 132 of a negative direct current bus 130. The second DC/DC boost circuit 350 is a conventional boost circuit, for example, a boost circuit. Details are not described herein again. In this embodiment, the second DC/DC boost circuit 350 and the first bypass circuit 210 do not share a switch, that is, the first bypass circuit 210 needs to be provided with an additional switch M.

### Sixth Embodiment

FIG. 12 is a schematic diagram of the sixth embodiment of this application. The schematic diagram of FIG. 12 is similar to the schematic diagram of FIG. 6. A main difference between this embodiment and the first embodiment is that a first unit further includes a second DC/DC boost circuit 350.

Referring to FIG. 12, a photovoltaic inverter is a two-stage photovoltaic inverter, and the photovoltaic inverter further includes a second DC/DC boost circuit 350. Disposition of the second DC/DC boost circuit 350 can help the photovoltaic inverter obtain a wider voltage range and a wider MPPT voltage range. In this embodiment, a positive input end 351 of the second DC/DC boost circuit 350 is configured to electrically connect to a positive output end 231 of a first photovoltaic module 230. A negative input end 352 of the second DC/DC boost circuit 350 is configured to electrically connect to a negative output end 232 of the first photovoltaic module 230. A positive output end 353 of the second DC/DC boost circuit 350 is electrically connected to a first end 211 of a first bypass circuit 210 and a second end 242 of a first backflow prevention switch 240 respectively. A negative output end 354 of the second DC/DC boost circuit 350 is electrically connected to a second end 212 of the first bypass circuit 210 and a second end 132 of a negative direct current bus 130 respectively. The second DC/DC boost circuit 350 is a conventional boost circuit, for example, a boost circuit. Details are not described herein again. In this embodiment, the second DC/DC boost circuit 350 and the first bypass circuit 210 do not share a switch, that is, the first bypass circuit 210 needs to be provided with an additional switch M.

### Seventh Embodiment

FIG. 13 is a schematic diagram of the seventh embodiment of this application. The schematic diagram of FIG. 13 is similar to the schematic diagram of FIG. 9. A main difference between this embodiment and the fourth embodiment is that a photovoltaic inverter further includes a plurality of first units 200.

Referring to FIG. 13, in this embodiment, the photovoltaic inverter includes a plurality of first units 200, and a quantity of first units 200 is, for example, 2, 3, 4, 5, or more. Each first unit 200 is configured to electrically connect to a first photovoltaic module 230, and different first units 200 are connected to different first photovoltaic modules 230. Each first unit 200 is further electrically connected to a second end 122 of a same positive direct current bus 120 and a second end 132 of a same negative direct current bus 130. A first end 121 of the positive direct current bus 120 and a first end 131 of the negative direct current bus 130 are electrically connected to an DC/AC converter 110 respectively.

In this embodiment, each first unit 200 includes a first bypass circuit 210 and an isolation circuit 220. For a specific connection mode of the first bypass circuit 210 and the isolation circuit 220, refer to the first embodiment and the second embodiment. Details are not described herein again. In this embodiment, a first end 141 of a drive control circuit 140 is electrically connected to third ends 223 of all isolation circuits 220, and a second end 142 of the drive control circuit 140 is electrically connected to third ends 213 of all first bypass circuits 210.

In this embodiment, after the drive control circuit 140 detects that the positive direct current bus 120 and the negative direct current bus 130 are faulty, the drive control circuit 140 is configured to control all the first bypass circuits 210 to be connected, so that a current flowing through the isolation circuit 220 is less than or equal to a preset current, and the drive control circuit 140 is configured to control the isolation circuit 220 to be disconnected, so that the first photovoltaic module 230 is disconnected from the positive direct current bus 120 or the negative direct current bus 130. In addition, in the same first unit 200, a time point at which the isolation circuit 220 is disconnected is later than a time point at which the first bypass circuit 210 is connected.

Still referring to FIG. 13, in this embodiment, the photovoltaic inverter further includes at least one third unit 400, and a quantity of third units 400 may be, for example, 1, 2, 3, or more. In this embodiment, the third unit 400 includes a photovoltaic capacitor Cpv. A first end Dup1 of the photovoltaic capacitor Cpv is electrically connected to the second end 122 of the positive direct current bus 120, and is further configured to electrically connect to a positive output end 431 of a third photovoltaic module 430. A second end Dup2 of the photovoltaic capacitor Cpv is electrically connected to the second end 132 of the negative direct current bus 130, and is further configured to electrically connect to a negative output end 432 of the third photovoltaic module 430. In this embodiment, the third unit 400 further includes a second DC/DC boost circuit 350. A positive input end 351 of the second DC/DC boost circuit 350 is electrically connected to the first end Dup1 of the photovoltaic capacitor Cpv, and is further configured to electrically connect to the positive output end 431 of the third photovoltaic module 430. A negative input end 352 of the second DC/DC boost circuit 350 is electrically connected to the second end Dup2 of the photovoltaic capacitor Cpv, and is further configured to electrically connect to the negative output end 432 of the third photovoltaic module 430. A positive output end 353 of the second DC/DC boost circuit 350 is electrically connected to the second end 122 of the positive direct current bus 120. A negative output end 354 of the second DC/DC boost circuit 350 is electrically connected to the second end 132 of the negative direct current bus 130. For a specific circuit structure of the second DC/DC boost circuit 350, refer to the first DC/DC boost circuit. Details are not described herein again.

In this embodiment, because the photovoltaic inverter includes a plurality of first units 200, and each first unit 200 includes a first bypass circuit 210 and an isolation circuit 220, when the drive control circuit 140 detects that the positive direct current bus 120 and the negative direct current bus 130 are faulty, the drive control circuit 140 controls all the isolation circuits 220 to be disconnected, so that the first photovoltaic modules 230 are disconnected from the positive direct current bus 120 or the negative direct current bus 130. Therefore, the first photovoltaic modules 230 connected to the first units 200 cannot continue to transfer energy to a faulty point, energy transferred to the faulty point is reduced, and further spreading of the faulty point can be prevented. Likewise, the first bypass circuit 210 is disposed together with the isolation circuit 220, and in the same first unit 200, the time point at which the isolation circuit 220 is disconnected is later than the time point at which the first bypass circuit 210 is connected. Therefore, after the first bypass circuit 210 is connected, the isolation circuit 220 disconnects the first photovoltaic module 230 from the positive direct current bus 120 or the negative direct current bus 130. An advantage of this disposition is to provide a condition for low-current disconnection of the isolation circuit 220, and avoid a voltage surge or arcing generated when the isolation circuit 220 is directly disconnected. In addition, the isolation circuit 220 can be prevented from being damaged by a high voltage generated when the isolation circuit 220 is directly disconnected. In this application, a requirement on voltage withstand of the isolation circuit 220 is relatively low, and costs of the isolation circuit 220 are relatively low. In addition, in this embodiment, because the photovoltaic inverter includes a plurality of first units 200 and a plurality of third units 400, and the first units 200 are configured to electrically connect to the first photovoltaic modules 230, and the third units 400 are configured to electrically connect to third photovoltaic modules 430, the photovoltaic inverter can generate relatively high power, thereby improving applicability of the photovoltaic inverter.

### Eighth Embodiment

FIG. 14 is a schematic diagram of the eighth embodiment of this application. The schematic diagram of FIG. 14 is similar to the schematic diagram of FIG. 13. A main difference between this embodiment and the seventh embodiment is that a photovoltaic inverter does not include a third unit 400.

Referring to FIG. 14, different from the photovoltaic inverter including a plurality of first units 200 and a plurality of third units 400 in the seventh embodiment, the photovoltaic inverter in this embodiment includes only a plurality of first units 200 and does not include a third unit 400.

In this embodiment, because the photovoltaic inverter does not include the third unit 400, when a drive control circuit 140 detects that a positive direct current bus 120 and a negative direct current bus 130 are faulty, the drive control circuit 140 controls all isolation circuits 220 to be disconnected, so that first photovoltaic modules 230 are disconnected from the positive direct current bus 120 or the negative direct current bus 130. Therefore, paths for transferring energy from all the first photovoltaic modules 230 to a faulty point are isolated, no energy is continuously input at the faulty point, and the fault does not spread.

### Ninth Embodiment

FIG. 15 is a schematic diagram of the ninth embodiment of this application. The schematic diagram of FIG. 15 is similar to the schematic diagram of FIG. 13. A main difference between this embodiment and the seventh embodiment is that a first unit 200 further includes at least one second unit 500.

Referring to FIG. 15 and FIG. 16, in this embodiment, there are a plurality of first units 200, and each first unit 200 includes at least one second unit 500. For example, the first unit 200 includes one, two, three, or more second units 500. In this embodiment, the second unit 500 includes a second bypass circuit 510.

Specifically, referring to FIG. 16, in a first unit 200, a first end 511 of a second bypass circuit 510 is electrically connected to a second end 222 of an isolation circuit 220 and is configured to electrically connect to a positive output end 531 of a second photovoltaic module 530, that is, both a first end 211 of a first bypass circuit 210 and the first end 511 of the second bypass circuit 510 are electrically connected to the second end 222 of the isolation circuit 220. A second end 512 of the second bypass circuit 510 is electrically connected to a second end 132 of a negative direct current bus 130 and is configured to electrically connect to a negative output end 532 of the second photovoltaic module 530. A second end 142 of a drive control circuit 140 is electrically connected to third ends 513 of all second bypass circuits 510. After the drive control circuit 140 is configured to detect that a positive direct current bus 120 and the negative direct current bus 130 are faulty, the drive control circuit 140 is configured to control both the first bypass circuit 210 and the first end 511 and the second end of the second bypass circuit 510 to be connected, and configured to control a first end 221 and the second end 222 of the isolation circuit 220 to be disconnected, so that a first photovoltaic module 230 and the second photovoltaic module 530 are disconnected from the positive direct current bus 120. In addition, in the same first unit 200, a time point at which the isolation circuit 220 is disconnected is later than a time point at which the first bypass circuit 210 and the second bypass circuit 510 are connected. In this embodiment, the first bypass circuit 210 and the second bypass circuit 510 in the same first unit 200 are jointly connected to the same isolation circuit 220.

In this embodiment, the first unit 200 further includes at least one second unit 500, each second unit 500 includes a second bypass circuit 510, and all second bypass circuits 510 and the first bypass circuit 210 in the same first unit 200 are jointly connected to the same isolation circuit 220. Therefore, a quantity of isolation circuits 220 can be reduced, and this helps reduce costs. In addition, when the drive control circuit 140 detects that the positive direct current bus 120 and the negative direct current bus 130 are faulty, the drive control circuit 140 controls the isolation circuit 220 to be disconnected, so that the first photovoltaic module 230 and the second photovoltaic module 530 are disconnected from the positive direct current bus 120. Therefore, the first photovoltaic module 230 and the second photovoltaic module 530 cannot continue to transfer energy to a faulty point, energy transferred to the faulty point is reduced, and further spreading of the fault can be prevented. Likewise, in the same first unit 200, the time point at which the isolation circuit 220 is disconnected is later than the time point at which the second bypass circuit 510 and the first bypass circuit 210 are connected. An advantage of this disposition is to provide a condition for low-current disconnection of the isolation circuit 220, and avoid a voltage surge or arcing generated when the isolation circuit 220 is disconnected. In addition, the isolation circuit 220 can be prevented from being damaged by a high voltage generated when the isolation circuit 220 is directly disconnected. This application has a relatively low requirement on voltage withstand of the isolation circuit 220, and costs of the isolation circuit 220 are relatively low. In addition, in this embodiment, because the first unit 200 further includes at least one second unit 500, and the second unit 500 is configured to electrically connect to the second photovoltaic module 530, the photovoltaic inverter can generate relatively high power, thereby improving applicability of the photovoltaic inverter.

In this embodiment, a circuit structure of the second bypass circuit 510 is the same as a circuit structure of the first bypass circuit 210. For details, refer to the first embodiment. Details are not described herein again.

Optionally, in this embodiment, a first end 241 of a first backflow prevention switch 240 is electrically connected to the second end 222 of the isolation circuit 220 and the first end 511 of the second bypass circuit 510 respectively, and a second end 242 of the first backflow prevention switch 240 is electrically connected to the first end 211 of the first bypass circuit 210. In addition, in another embodiment of this application, the first end 241 of the first backflow prevention switch 240 is electrically connected to a second end 212 of the first bypass circuit 210, and the second end 242 of the first backflow prevention switch 240 is electrically connected to the second end 132 of the negative direct current bus 130 and the second end 512 of the second bypass circuit 510 respectively. In this embodiment, the first backflow prevention switch 240 can prevent a bus capacitor Cbus from being discharged by using the first bypass circuit 210. When the first bypass circuit 210 is connected, the first backflow prevention switch 240 can further prevent the second photovoltaic module 530 from forming a current loop by using the second unit 500 and the first bypass circuit 210, thereby preventing a risk of damage caused by an excessively high current to the first bypass circuit 210.

Optionally, in this embodiment, the second unit 500 further includes a second backflow prevention switch 540. A first end 541 of the second backflow prevention switch 540 is electrically connected to the second end 222 of the isolation circuit 220 and the first end 211 of the first bypass circuit 210 respectively. A second end 542 of the second backflow prevention switch 540 is electrically connected to the first end 511 of the second bypass circuit 510. In addition, in another embodiment of this application, the first end 541 of the second backflow prevention switch 540 is electrically connected to the second end 512 of the second bypass circuit 510, and the second end 542 of the second backflow prevention switch 540 is electrically connected to the second end 132 of the negative direct current bus 130 and the second end 212 of the first bypass circuit 210 respectively. In this embodiment, the second backflow prevention switch 540 can prevent the bus capacitor Cbus from being discharged by using the second bypass circuit 510. When the second bypass circuit 510 is connected, the second backflow prevention switch 540 can further prevent the first photovoltaic module 230 and the another second photovoltaic module 530 from forming a current loop by using the second bypass circuit 510, thereby preventing a risk of damage caused by an excessively high current to the second bypass circuit 510. In this embodiment, like the first backflow prevention switch 240, the second backflow prevention switch 540 is also a diode. A first end of the second backflow prevention switch 540 is a cathode of the diode, and a second end of the second backflow prevention switch 540 is an anode of the diode.

In this embodiment, the second unit 500 further includes a first DC/AC boost circuit 150.

### Tenth Embodiment

FIG. 17 is a schematic diagram of the tenth embodiment of this application. The schematic diagram of FIG. 17 is similar to the schematic diagram of FIG. 15. A main difference between this embodiment and the ninth embodiment is that a first end 221 of an isolation circuit 220 in a first unit 200 is electrically connected to a second end 132 of a negative direct current bus 130.

Referring to FIG. 17 and FIG. 18, in this embodiment, there are a plurality of first units 200. A first end 221 of an isolation circuit 220 of each first unit 200 is electrically connected to a second end 132 of a negative direct current bus 130. A second end 222 of the isolation circuit 220 is electrically connected to a second end 212 of a first bypass circuit 210 and is configured to electrically connect to a negative output end 232 of a first photovoltaic module 230. In this embodiment, each first unit 200 includes at least one second unit 500, and the second unit 500 includes a second bypass circuit 510.

Specifically, referring to FIG. 18, in a first unit 200, a first end 511 of a second bypass circuit 510 is electrically connected to a second end 122 of a positive direct current bus 120 and is configured to electrically connect to a positive output end 531 of a second photovoltaic module 530. A second end 512 of the second bypass circuit 510 is electrically connected to the second end 222 of the isolation circuit 220 and is configured to electrically connect to a negative output end 532 of the second photovoltaic module 530. That is, both the second end 212 of the first bypass circuit 210 and the second end 512 of the second bypass circuit 510 are electrically connected to the second end 222 of the isolation circuit 220. A second end 142 of a drive control circuit 140 is electrically connected to a third end 513 of the second bypass circuit 510. After the drive control circuit 140 is configured to detect that the positive direct current bus 120 and the negative direct current bus 130 are faulty, the drive control circuit 140 is configured to control both the first bypass circuit 210 and the first end 511 and the second end of the second bypass circuit 510 to be connected, and configured to control the first end 221 and the second end 222 of the isolation circuit 220 to be disconnected, so that the first photovoltaic module 230 and the second photovoltaic module 530 are disconnected from the negative direct current bus 130. In addition, in the same first unit 200, a time point at which the isolation circuit 220 is disconnected is later than a time point at which the first bypass circuit 210 and the second bypass circuit 510 are connected. In this embodiment, the first bypass circuit 210 and the second bypass circuit 510 in the same first unit 200 are jointly connected to the same isolation circuit 220.

In this embodiment, the first unit 200 further includes at least one second unit 500, each second unit 500 includes a second bypass circuit 510, and all second bypass circuits 510 and the first bypass circuit 210 in the same first unit 200 are jointly connected to the same isolation circuit 220. Therefore, a quantity of isolation circuits 220 can be reduced, and this helps reduce costs. In addition, when the drive control circuit 140 detects that the positive direct current bus 120 and the negative direct current bus 130 are faulty, the drive control circuit 140 controls the isolation circuit 220 to be disconnected, so that the first photovoltaic module 230 and the second photovoltaic module 530 are disconnected from the negative direct current bus 130. Therefore, the first photovoltaic module 230 and the second photovoltaic module 530 cannot continue to transfer energy to a faulty point, energy transferred to the faulty point is reduced, and further spreading of the fault can be prevented. Likewise, in the same first unit 200, the time point at which the isolation circuit 220 is disconnected is later than the time point at which the second bypass circuit 510 and the first bypass circuit 210 are connected. An advantage of this disposition is to provide a condition for low-current disconnection of the isolation circuit 220, and avoid a voltage surge or arcing generated when the isolation circuit 220 is disconnected. In addition, the isolation circuit 220 can be prevented from being damaged by a high voltage generated when the isolation circuit 220 is directly disconnected. This application has a relatively low requirement on voltage withstand of the isolation circuit 220, and costs of the isolation circuit 220 are relatively low. In addition, in this embodiment, because the first unit 200 further includes at least one second unit 500, and the second unit 500 is configured to electrically connect to the second photovoltaic module 530, the photovoltaic inverter can generate relatively high power, thereby improving applicability of the photovoltaic inverter.

Optionally, in this embodiment, a first end 241 of a first backflow prevention switch 240 is electrically connected to the second end 122 of the positive direct current bus 120 and the first end 511 of the second bypass circuit 510 respectively, and a second end 242 of the first backflow prevention switch 240 is electrically connected to the first end 211 of the first bypass circuit 210. In addition, in another embodiment of this application, the first end 241 of the first backflow prevention switch 240 is electrically connected to the second end 212 of the first bypass circuit 210, and the second end 242 of the first backflow prevention switch 240 is electrically connected to the second end 222 of the isolation circuit 220 and the second end 512 of the second bypass circuit 510 respectively. In this embodiment, the first backflow prevention switch 240 can prevent a bus capacitor Cbus from being discharged by using the first bypass circuit 210. When the first bypass circuit 210 is connected, the first backflow prevention switch 240 can further prevent the second photovoltaic module 530 from forming a current loop by using the second unit 500 and the first bypass circuit 210, thereby preventing a risk of damage caused by an excessively high current to the first bypass circuit 210.

Optionally, in this embodiment, the second unit 500 further includes a second backflow prevention switch 540. A first end 541 of the second backflow prevention switch 540 is electrically connected to the second end 122 of the positive direct current bus 120 and the first end 211 of the first bypass circuit 210 respectively, and a second end 542 of the second backflow prevention switch 540 is electrically connected to the first end 511 of the second bypass circuit 510. In addition, in another embodiment of this application, the first end 541 of the second backflow prevention switch 540 is electrically connected to the second end 512 of the second bypass circuit 510, and the second end 542 of the second backflow prevention switch 540 is electrically connected to the second end 222 of the isolation circuit 220 and the second end 212 of the first bypass circuit 210 respectively. In this embodiment, the second backflow prevention switch 540 can prevent the bus capacitor Cbus from being discharged by using the second bypass circuit 510. When the second bypass circuit 510 is connected, the second backflow prevention switch 540 can further prevent the first photovoltaic module 230 and the another second photovoltaic module 530 from forming a current loop by using the second bypass circuit 510, thereby preventing a risk of damage caused by an excessively high current to the second bypass circuit 510. In this embodiment, like the first backflow prevention switch 240, the second backflow prevention switch 540 is also a diode. A first end of the second backflow prevention switch 540 is a cathode of the diode, and a second end of the second backflow prevention switch 540 is an anode of the diode.

### Eleventh Embodiment

FIG. 19 is a schematic diagram of the eleventh embodiment of this application. The schematic diagram of FIG. 19 is similar to the schematic diagram of FIG. 15. A main difference between this embodiment and the ninth embodiment is that a third unit 400 is not included.

Referring to FIG. 19, different from the photovoltaic inverter including a plurality of first units 200 and a plurality of third units 400 in the ninth embodiment, each photovoltaic inverter in this embodiment includes only a plurality of first units 200, and does not include a third unit 400.

In this embodiment, because the photovoltaic inverter does not include the third unit 400, when a drive control circuit 140 detects that a positive direct current bus 120 and a negative direct current bus 130 are faulty, the drive control circuit 140 controls all isolation circuits 220 to be disconnected, so that first photovoltaic modules 230 are disconnected from the positive direct current bus 120 or the negative direct current bus 130. Therefore, paths for transferring energy from all the first photovoltaic modules 230 to a faulty point are isolated, no energy is continuously input at the faulty point, and the fault does not spread.

The embodiments of this application are described in detail above. The principle and implementation of this application are described herein through specific examples. The description about the embodiments of this application is merely provided to help understand the method and core ideas of this application. In addition, a person of ordinary skill in the art can make variations and modifications to this application in terms of the specific implementations and application scopes according to the ideas of this application. Therefore, the content of specification shall not be construed as a limit to this application.

## Claims

1. A photovoltaic inverter, comprising a DC/AC converter (110), a positive direct current bus (120), a negative direct current bus (130), a drive control circuit (140), and at least one first unit (200), wherein a first end of the positive direct current bus and a first end of the negative direct current bus are electrically connected to the DC/AC converter respectively, and the first unit comprises a first bypass circuit (210) and an isolation circuit (220), wherein either
a) when a first end of the isolation circuit is electrically connected to a second end of the positive direct current bus, a second end of the isolation circuit is configured to electrically connect to a positive output end of a first photovoltaic module (230), and a second end of the negative direct current bus is configured to electrically connect to a negative output end of the first photovoltaic module; a first end of the first bypass circuit is electrically connected to the second end of the isolation circuit, and a second end of the first bypass circuit is electrically connected to the second end of the negative direct current bus; and a first end of the drive control circuit is electrically connected to a third end of the isolation circuit, a second end of the drive control circuit is electrically connected to a third end of the first bypass circuit, and after the drive control circuit is configured to detect that the positive direct current bus and the negative direct current bus are faulty, the drive control circuit is configured to control the first end and the second end of the first bypass circuit to be connected and is configured to control the first end and the second end of the isolation circuit to be disconnected, so that the first photovoltaic module is disconnected from the positive direct current bus, wherein a time point at which the isolation circuit is disconnected is later than a time point at which the first bypass circuit is connected; or
b) when a first end of the isolation circuit is electrically connected to a second end of the negative direct current bus, a second end of the isolation circuit is configured to electrically connect to a negative output end of the first photovoltaic module, and a second end of the positive direct current bus is configured to electrically connect to a positive output end of the first photovoltaic module; a first end of the first bypass circuit is electrically connected to the second end of the positive direct current bus, and a second end of the first bypass circuit is electrically connected to the second end of the isolation circuit; and a first end of the drive control circuit is electrically connected to a third end of the isolation circuit, a second end of the drive control circuit is electrically connected to a third end of the first bypass circuit, and after the drive control circuit is configured to detect that the positive direct current bus and the negative direct current bus are faulty, the drive control circuit is configured to control the first end and the second end of the first bypass circuit to be connected and is configured to control the first end and the second end of the isolation circuit to be disconnected, so that the first photovoltaic module is disconnected from the negative direct current bus, wherein a time point at which the isolation circuit is disconnected is later than a time point at which the first bypass circuit is connected.
**characterized in that**
the photovoltaic inverter further comprises a bus capacitor, two ends of the bus capacitor are electrically connected to the positive direct current bus and the negative direct current bus respectively, and the first unit further comprises a first backflow prevention switch (240); and wherein
either a) when the first end of the isolation circuit is electrically connected to the second end of the positive direct current bus, a first end of the first backflow prevention switch is electrically connected to the second end of the positive direct current bus, and a second end of the first backflow prevention switch is electrically connected to the first end of the isolation circuit, or a first end of the first backflow prevention switch is electrically connected to the second end of the isolation circuit, and a second end of the first backflow prevention switch is electrically connected to the first end of the first bypass circuit, or a first end of the first backflow prevention switch is electrically connected to the second end of the first bypass circuit, and a second end of the first backflow prevention switch is electrically connected to the second end of the negative direct current bus, wherein after the first bypass circuit is connected, the first backflow prevention switch is configured to prevent the bus capacitor from being discharged by using the first bypass circuit;
or b) when the first end of the isolation circuit is electrically connected to the second end of the negative direct current bus, a first end of the first backflow prevention switch is electrically connected to the second end of the positive direct current bus, and a second end of the first backflow prevention switch is electrically connected to the first end of the first bypass circuit, or a first end of the first backflow prevention switch is electrically connected to the second end of the first bypass circuit, and a second end of the first backflow prevention switch is electrically connected to the second end of the isolation circuit, or a first end of the first backflow prevention switch is electrically connected to the first end of the isolation circuit, and a second end of the first backflow prevention switch is electrically connected to the second end of the negative direct current bus, wherein after the first bypass circuit is connected, the first backflow prevention switch is configured to prevent the bus capacitor from being discharged by using the first bypass circuit.

2. The photovoltaic inverter according to claim 1, wherein the first bypass circuit (210) is a normally open switch, the isolation circuit (220) is a normally open breaker, and when the photovoltaic inverter is started, after the drive control circuit (140) controls the first bypass circuit so that a voltage difference between the first end and the second end of the isolation circuit is less than or equal to a preset voltage, the drive control circuit is configured to control the first end and the second end of the isolation circuit to be connected, so that the first photovoltaic module (230) is connected to the positive direct current bus and the negative direct current bus respectively; and after the isolation circuit is connected, the drive control circuit is further configured to control the first end and the second end of the first bypass circuit to be disconnected, to complete starting of the photovoltaic inverter.

3. The photovoltaic inverter according to claim 1, wherein the first unit (200) further comprises at least one second unit, and the second unit comprises a second bypass circuit; and
when the first end of the isolation circuit (220) is electrically connected to the second end of the positive direct current bus (120), a first end of the second bypass circuit is electrically connected to the second end of the isolation circuit and is configured to electrically connect to a first end of a second photovoltaic module, a second end of the second bypass circuit is electrically connected to the second end of the negative direct current bus (130) and is configured to electrically connect to a second end of the second photovoltaic module, the second end of the drive control circuit (140) is electrically connected to a third end of the second bypass circuit, and after the drive control circuit is configured to detect that the positive direct current bus and the negative direct current bus are faulty, the drive control circuit is configured to control the first end and the second end of the second bypass circuit to be connected and is configured to control the first end and the second end of the isolation circuit to be disconnected, so that the second photovoltaic module is disconnected from the positive direct current bus, wherein a time point at which the isolation circuit is disconnected is later than a time point at which the second bypass circuit is connected; or
when the first end of the isolation circuit is electrically connected to the second end of the negative direct current bus, a first end of the second bypass circuit is electrically connected to the second end of the positive direct current bus and is configured to electrically connect to a first end of a second photovoltaic module, a second end of the second bypass circuit is electrically connected to the second end of the isolation circuit and is configured to electrically connect to a second end of the second photovoltaic module, the second end of the drive control circuit is electrically connected to a third end of the second bypass circuit, and after the drive control circuit is configured to detect that the positive direct current bus and the negative direct current bus are faulty, the drive control circuit is configured to control the first end and the second end of the second bypass circuit to be connected and is configured to control the first end and the second end of the isolation circuit to be disconnected, so that the second photovoltaic module is disconnected from the negative direct current bus, wherein a time point at which the isolation circuit is disconnected is later than a time point at which the second bypass circuit is connected.

4. The photovoltaic inverter according to claim 3, wherein
when the first end of the isolation circuit (220) is electrically connected to the second end of the positive direct current bus (120), a first end of the first backflow prevention switch (240) is electrically connected to the second end of the isolation circuit (220) and the first end of the second bypass circuit respectively, and a second end of the first backflow prevention switch is electrically connected to the first end of the first bypass circuit (210), or a first end of the first backflow prevention switch is electrically connected to the second end of the first bypass circuit, and a second end of the first backflow prevention switch is electrically connected to the second end of the negative direct current bus (130) and the second end of the second bypass circuit respectively, wherein after the first bypass circuit is connected, the first backflow prevention switch is configured to prevent the bus capacitor and the second photovoltaic module from being discharged by using the first bypass circuit; or
when the first end of the isolation circuit is electrically connected to the second end of the negative direct current bus, a first end of the first backflow prevention switch is electrically connected to the second end of the positive direct current bus and the first end of the second bypass circuit respectively, and a second end of the first backflow prevention switch is electrically connected to the first end of the first bypass circuit, or a first end of the first backflow prevention switch is electrically connected to the second end of the first bypass circuit, and a second end of the first backflow prevention switch is electrically connected to the second end of the isolation circuit and the second end of the second bypass circuit respectively, wherein after the first bypass circuit is connected, the first backflow prevention switch is configured to prevent the bus capacitor and the second photovoltaic module from being discharged by using the first bypass circuit.

5. The photovoltaic inverter according to claim 3, wherein the second unit further comprises a second backflow prevention switch; and
when the first end of the isolation circuit (220) is electrically connected to the second end of the positive direct current bus (120), a first end of the second backflow prevention switch is electrically connected to the second end of the isolation circuit and the first end of the first bypass circuit (210) respectively, and a second end of the second backflow prevention switch is electrically connected to the first end of the second bypass circuit, or a first end of the second backflow prevention switch is electrically connected to the second end of the second bypass circuit, and a second end of the second backflow prevention switch is electrically connected to the second end of the negative direct current bus (130) and the second end of the first bypass circuit respectively, wherein after the second bypass circuit is connected, the second backflow prevention switch is configured to prevent the bus capacitor and the first photovoltaic module (230) from being discharged by using the second bypass circuit; or
when the first end of the isolation circuit is electrically connected to the second end of the negative direct current bus, a first end of the second backflow prevention switch is electrically connected to the second end of the positive direct current bus and the first end of the first bypass circuit respectively, and a second end of the second backflow prevention switch is electrically connected to the first end of the second bypass circuit, or a first end of the second backflow prevention switch is electrically connected to the second end of the second bypass circuit, and a second end of the second backflow prevention switch is electrically connected to the second end of the isolation circuit and the second end of the first bypass circuit respectively, wherein after the second bypass circuit is connected, the second backflow prevention switch is configured to prevent the bus capacitor and the first photovoltaic module from being discharged by using the second bypass circuit.

6. A photovoltaic power generation system, comprising the photovoltaic inverter according to any one of claims 1 to 5, wherein the photovoltaic power generation system further comprises a first photovoltaic module, and the first photovoltaic module is electrically connected to the photovoltaic inverter.

## Patentansprüche

1. Photovoltaikwechselrichter, umfassend einen Gleichstrom/Wechselstromwandler (110), einen positiven Gleichstrombus (120), einen negativen Gleichstrombus (130), eine Antriebssteuerschaltung (140) und mindestens eine erste Einheit (200), wobei ein erstes Ende des positiven Gleichstrombusses und ein erstes Ende des negativen Gleichstrombusses jeweils mit dem Gleichstrom- beziehungsweise dem Wechselstromwandler elektrisch verbunden sind und die erste Einheit eine erste Bypass-Schaltung (210) und eine Isolationsschaltung (220) umfasst, wobei entweder
a) wenn ein erstes Ende der Isolationsschaltung mit einem zweiten Ende des positiven Gleichstrombusses elektrisch verbunden ist, ein zweites Ende der Isolationsschaltung konfiguriert ist, um mit einem positiven Ausgangsende eines ersten Photovoltaikmoduls (230) elektrisch zu verbinden, und ein zweites Ende des negativen Gleichstrombusses konfiguriert ist, um mit einem negativen Ausgangsende des ersten Photovoltaikmoduls elektrisch zu verbinden; ein erstes Ende der ersten Bypass-Schaltung mit dem zweiten Ende der Isolationsschaltung elektrisch verbunden ist und ein zweites Ende der ersten Bypass-Schaltung mit dem zweiten Ende des negativen Gleichstrombusses elektrisch verbunden ist; und ein erstes Ende der Antriebssteuerschaltung mit einem dritten Ende der Isolationsschaltung elektrisch verbunden ist, ein zweites Ende der Antriebssteuerschaltung mit einem dritten Ende der ersten Bypass-Schaltung elektrisch verbunden ist, und nachdem die Antriebssteuerschaltung konfiguriert ist, um zu erfassen, dass der positive Gleichstrombus und der negative Gleichstrombus fehlerhaft sind, die Antriebssteuerschaltung konfiguriert ist, um das erste Ende und das zweite Ende der ersten Bypass-Schaltung zu steuern, um verbunden zu werden, und konfiguriert ist, um das erste Ende und das zweite Ende der Isolationsschaltung zu steuern, um getrennt zu werden, so dass das erste Photovoltaikmodul von dem positiven Gleichstrombus getrennt wird, wobei ein Zeitpunkt, zu dem die Isolationsschaltung getrennt ist, später als ein Zeitpunkt ist, zu dem die erste Bypass-Schaltung verbunden ist; oder
b) wenn ein erstes Ende der Isolationsschaltung mit einem zweiten Ende des negativen Gleichstrombusses elektrisch verbunden ist, ein zweites Ende der Isolationsschaltung konfiguriert ist, um mit einem negativen Ausgangsende des ersten Photovoltaikmoduls elektrisch zu verbinden, und ein zweites Ende des positiven Gleichstrombusses konfiguriert ist, um mit einem positiven Ausgangsende des ersten Photovoltaikmoduls elektrisch zu verbinden; ein erstes Ende der ersten Bypass-Schaltung mit dem zweiten Ende des positiven Gleichstrombusses elektrisch verbunden ist und ein zweites Ende der ersten Bypass-Schaltung mit dem zweiten Ende der Isolationsschaltung elektrisch verbunden ist; und ein erstes Ende der Antriebssteuerschaltung mit einem dritten Ende der Isolationsschaltung elektrisch verbunden ist, ein zweites Ende der Antriebssteuerschaltung mit einem dritten Ende der ersten Bypass-Schaltung elektrisch verbunden ist, und nachdem die Antriebssteuerschaltung konfiguriert ist, um zu erfassen, dass der positive Gleichstrombus und der negative Gleichstrombus fehlerhaft sind, die Antriebssteuerschaltung konfiguriert ist, um das erste Ende und das zweite Ende der ersten Bypass-Schaltung zu steuern, um verbunden zu werden, und konfiguriert ist, um das erste Ende und das zweite Ende der Isolationsschaltung zu steuern, um getrennt zu werden, so dass das erste Photovoltaikmodul von dem negativen Gleichstrombus getrennt wird, wobei ein Zeitpunkt, zu dem die Isolationsschaltung getrennt ist, später als ein Zeitpunkt ist, zu dem die erste Bypass-Schaltung verbunden ist.
**dadurch gekennzeichnet, dass**
der Photovoltaikwechselrichter ferner einen Buskondensator umfasst, zwei Enden des Buskondensators mit dem positiven Gleichstrombus beziehungsweise dem negativen Gleichstrombus elektrisch verbunden sind und die erste Einheit ferner einen ersten Rückflussverhinderungsschalter (240) umfasst; und wobei entweder
a) wenn das erste Ende der Isolationsschaltung mit dem zweiten Ende des positiven Gleichstrombusses elektrisch verbunden ist, ein erstes Ende des ersten Rückflussverhinderungsschalters mit dem zweiten Ende des positiven Gleichstrombusses elektrisch verbunden ist, und ein zweites Ende von dem ersten Rückflussverhinderungsschalter mit dem ersten Ende der Isolationsschaltung elektrisch verbunden ist, oder ein erstes Ende des ersten Rückflussverhinderungsschalters mit dem zweiten Ende der Isolationsschaltung elektrisch verbunden ist, und ein zweites Ende des ersten Rückflussverhinderungsschalters mit dem ersten Ende der ersten Bypass-Schaltung elektrisch verbunden ist, oder ein erstes Ende des ersten Rückflussverhinderungsschalters mit dem zweiten Ende der ersten Bypass-Schaltung elektrisch verbunden ist, und ein zweites Ende des ersten Rückflussverhinderungsschalters mit dem zweiten Ende des negativen Gleichstrombusses elektrisch verbunden ist, wobei, nachdem die erste Bypass-Schaltung verbunden ist, der erste Rückflussverhinderungsschalter konfiguriert ist, um zu verhindern, dass der Buskondensator durch Verwenden der ersten Bypass-Schaltung entladen wird; oder
b) wenn das erste Ende der Isolationsschaltung mit dem zweiten Ende des negativen Gleichstrombusses elektrisch verbunden ist, ein erstes Ende des ersten Rückflussverhinderungsschalters mit dem zweiten Ende des positiven Gleichstrombusses elektrisch verbunden ist, und ein zweites Ende des ersten Rückflussverhinderungsschalters mit dem ersten Ende der ersten Bypass-Schaltung elektrisch verbunden ist, oder ein erstes Ende des ersten Rückflussverhinderungsschalters mit dem zweiten Ende der ersten Bypass-Schaltung elektrisch verbunden ist und ein zweites Ende des ersten Rückflussverhinderungsschalters mit dem zweiten Ende der Isolationsschaltung elektrisch verbunden ist, oder ein erstes Ende des ersten Rückflussverhinderungsschalters mit dem ersten Ende der Isolationsschaltung elektrisch verbunden ist und ein zweites Ende des ersten Rückflussverhinderungsschalters mit dem zweiten Ende des negativen Gleichstrombusses elektrisch verbunden ist, wobei, nachdem die erste Bypass-Schaltung verbunden ist, der erste Rückflussverhinderungsschalter konfiguriert ist, um zu verhindern, dass der Buskondensator durch Verwenden der ersten Bypass-Schaltung entladen wird.

2. Photovoltaikwechselrichter nach Anspruch 1, wobei die erste Bypass-Schaltung (210) ein normalerweise offener Schalter ist, die Isolationsschaltung (220) eine normalerweise offene Isolationsschaltung ist, und wenn der Photovoltaikwechselrichter gestartet wird, nachdem die Antriebssteuerschaltung (140) die erste Bypass-Schaltung steuert, so dass eine Spannungsdifferenz zwischen dem ersten Ende und dem zweiten Ende der Isolationsschaltung kleiner als oder gleich einer voreingestellten Spannung ist, wobei die Antriebssteuerschaltung konfiguriert ist, um das erste Ende und das zweite Ende der Isolationsschaltung zu steuern, die verbunden werden soll, so dass das erste Photovoltaikmodul (230) mit dem positiven Gleichstrombus beziehungsweise dem negativen Gleichstrombus verbunden ist; und nachdem die Isolationsschaltung verbunden ist, die Antriebssteuerschaltung ferner konfiguriert ist, um das erste Ende und das zweite Ende der ersten Bypass-Schaltung zu steuern, um getrennt zu werden, um das Starten des Photovoltaikwechselrichters abzuschließen.

3. Photovoltaikwechselrichter nach Anspruch 1, wobei die erste Einheit (200) ferner mindestens eine zweite Einheit umfasst und die zweite Einheit eine zweite Bypass-Schaltung umfasst; und
wenn das erste Ende der Isolationsschaltung (220) mit dem zweiten Ende des positiven Gleichstrombusses (120) elektrisch verbunden ist, ein erstes Ende der zweiten Bypass-Schaltung mit dem zweiten Ende der Isolationsschaltung elektrisch verbunden ist und konfiguriert ist, um mit einem ersten Ende eines zweiten Photovoltaikmoduls elektrisch zu verbinden, ein zweites Ende der zweiten Bypass-Schaltung mit dem zweiten Ende des negativen Gleichstrombusses (130) elektrisch verbunden ist und konfiguriert ist, um sich mit einem zweiten Ende des zweiten Photovoltaikmoduls elektrisch zu verbinden, das zweite Ende der Antriebssteuerschaltung (140) mit einem dritten Ende der zweiten Bypass-Schaltung elektrisch verbunden ist, und nachdem die Antriebssteuerschaltung konfiguriert ist, um zu erfassen, dass der positive Gleichstrombus und der negative Gleichstrombus fehlerhaft sind, die Antriebssteuerschaltung konfiguriert ist, um das erste Ende und das zweite Ende der zweiten Bypass-Schaltung zu steuern, um verbunden zu werdem, und konfiguriert ist, um das erste Ende und das zweite Ende der Isolationsschaltung zu steuern, um getrennt zu werden, so dass das zweite Photovoltaikmodul von dem positiven Gleichstrombus getrennt wird, wobei ein Zeitpunkt, zu dem die Isolationsschaltung getrennt ist, später als ein Zeitpunkt ist, zu dem die zweite Bypass-Schaltung verbunden ist; oder
wenn das erste Ende der Isolationsschaltung mit dem zweiten Ende des negativen Gleichstrombusses elektrisch verbunden ist, ein erstes Ende der zweiten Bypass-Schaltung mit dem zweiten Ende des positiven Gleichstrombusses elektrisch verbunden ist und konfiguriert ist, um mit einem ersten Ende eines zweiten Photovoltaikmoduls elektrisch zu verbinden, ein zweites Ende der zweiten Bypass-Schaltung mit dem zweiten Ende der Isolationsschaltung elektrisch verbunden ist und konfiguriert ist, um mit einem zweiten Ende des zweiten Photovoltaikmoduls elektrisch zu verbinden, das zweite Ende der Antriebssteuerschaltung mit einem dritten Ende der zweiten Bypass-Schaltung elektrisch verbunden ist, und nachdem die Antriebssteuerschaltung konfiguriert ist, um zu erfassen, dass der positive Gleichstrombus und der negative Gleichstrombus fehlerhaft sind, die Antriebssteuerschaltung konfiguriert ist, um das erste Ende und das zweite Ende der zweiten Bypass-Schaltung zu steuern, um verbunden zu werden, und konfiguriert ist, um das erste Ende und das zweite Ende der Isolationsschaltung zu steuern, um getrennt zu werden, so dass das zweite Photovoltaikmodul von dem negativen Gleichstrombus getrennt wird, wobei ein Zeitpunkt, zu dem die Isolationsschaltung getrennt ist, später als ein Zeitpunkt ist, zu dem die erste Bypass-Schaltung verbunden ist; oder.

4. Photovoltaikwechselrichter nach Anspruch 3, wobei
wenn das erste Ende der Isolationsschaltung (220) mit dem zweiten Ende des positiven Gleichstrombusses (120) elektrisch verbunden ist, ein erstes Ende des ersten Rückflussverhinderungsschalters (240) mit dem zweiten Ende der Isolationsschaltung (220) beziehungsweise dem ersten Ende der zweiten Bypass-Schaltung elektrisch verbunden ist, und ein zweites Ende des ersten Rückflussverhinderungsschalters mit dem ersten Ende der ersten Bypass-Schaltung (210) elektrisch verbunden ist, oder ein erstes Ende des ersten Rückflussverhinderungsschalters mit dem zweiten Ende der ersten Bypass-Schaltung elektrisch verbunden ist und ein zweites Ende des ersten Rückflussverhinderungsschalters mit dem zweiten Ende des negativen Gleichstrombusses (130) beziehungsweise dem zweiten Ende der zweiten Bypass-Schaltung elektrisch verbunden ist, wobei, nachdem die erste Bypass-Schaltung verbunden ist, der erste Rückflussverhinderungsschalter konfiguriert ist, um zu verhindern, dass der Buskondensator und das zweite Photovoltaikmodul durch Verwenden der ersten Bypass-Schaltung entladen werden; oder
wenn das erste Ende der Isolationsschaltung mit dem zweiten Ende des negativen Gleichstrombusses elektrisch verbunden ist, ein erstes Ende des ersten Rückflussverhinderungsschalters mit dem zweiten Ende des positiven Gleichstrombusses beziehungsweise dem ersten Ende der zweiten Bypass-Schaltung verbunden ist, und ein zweites Ende des ersten Rückflussverhinderungsschalters mit dem ersten Ende der ersten Bypass-Schaltung elektrisch verbunden ist, oder ein erstes Ende des ersten Rückflussverhinderungsschalters mit dem zweiten Ende der ersten Bypass-Schaltung elektrisch verbunden ist, und ein zweites Ende des ersten Rückflussverhinderungsschalters mit dem zweiten Ende der Isolationsschaltung beziehungsweise dem zweiten Ende der zweiten Bypass-Schaltung elektrisch verbunden ist, wobei, nachdem die erste Bypass-Schaltung verbunden ist, der erste Rückflussverhinderungsschalter konfiguriert ist, um zu verhindern, dass der Buskondensator und das zweite Photovoltaikmodul durch Verwenden der ersten Bypass-Schaltung entladen werden.

5. Photovoltaikwechselrichter nach Anspruch 3, wobei die zweite Einheit ferner einen zweiten Rückflussverhinderungsschalter umfasst; und
wenn das erste Ende der Isolationsschaltung (220) mit dem zweiten Ende des positiven Gleichstrombusses (120) elektrisch verbunden ist, ein erstes Ende des zweiten Rückflussverhinderungsschalters mit dem zweiten Ende der Isolationsschaltung beziehungsweise dem ersten Ende der Bypass-Schaltung (210) elektrisch verbunden ist, und ein zweites Ende des zweiten Rückflussverhinderungsschalters mit dem ersten Ende der zweiten Bypass-Schaltung elektrisch verbunden ist, oder ein erstes Ende des zweiten Rückflussverhinderungsschalters mit dem zweiten Ende der zweiten Bypass-Schaltung elektrisch verbunden ist und ein zweites Ende des zweiten Rückflussverhinderungsschalters mit dem zweiten Ende des negativen Gleichstrombusses (130) beziehungsweise dem zweiten Ende der ersten Bypass-Schaltung elektrisch verbunden sind, wobei, nachdem zweiten Bypass-Schaltung verbunden ist, der zweite Rückflussverhinderungsschalter konfiguriert ist, um zu verhindern, dass der Buskondensator und das erste Photovoltaikmodul (230) durch Verwenden der zweiten Bypass-Schaltung entladen werden; oder
wenn das erste Ende der Isolationsschaltung mit dem zweiten Ende des negativen Gleichstrombusses elektrisch verbunden ist, ein erstes Ende des zweiten Rückflussverhinderungsschalters mit dem zweiten Ende des positiven Gleichstrombusses beziehungsweise dem ersten Ende der Bypass-Schaltung elektrisch verbunden ist, und ein zweites Ende des zweiten Rückflussverhinderungsschalters mit dem ersten Ende der zweiten Bypass-Schaltung elektrisch verbunden ist, oder ein erstes Ende des zweiten Rückflussverhinderungsschalters mit dem zweiten Ende der zweiten Bypass-Schaltung elektrisch verbunden ist und ein zweites Ende des zweiten Rückflussverhinderungsschalters mit dem zweiten Ende der Isolationsschaltung beziehungsweise dem zweiten Ende der ersten Bypass-Schaltung elektrisch verbunden ist, wobei, nachdem die zweite Bypass-Schaltung verbunden ist, der zweite Rückflussverhinderungsschalter konfiguriert ist, um zu verhindern, dass der Buskondensator und das erste Photovoltaikmodul durch Verwenden der zweiten Bypass-Schaltung entladen werden.

6. Photovoltaikleistungserzeugungssystem, umfassend den Photovoltaikwechselrichter nach einem der Ansprüche 1 bis 5, wobei das Photovoltaikleistungserzeugungssystem ferner ein erstes Photovoltaikmodul umfasst und das erste Photovoltaikmodul mit dem Photovoltaikwechselrichter elektrisch verbunden ist.

## Revendications

1. Onduleur photovoltaïque, comprenant un convertisseur CC/CA (110), un bus de courant continu positif (120), un bus de courant continu négatif (130), un circuit de commande d'entraînement (140) et au moins une première unité (200), dans lequel une première extrémité du bus de courant continu positif et une première extrémité du bus de courant continu négatif sont connectées électriquement au convertisseur CC/CA respectivement, et la première unité comprend un premier circuit de dérivation (210) et un circuit d'isolation (220), dans lequel soit
a) lorsqu'une première extrémité du circuit d'isolation est connectée électriquement à une seconde extrémité du bus de courant continu positif, une deuxième extrémité du circuit d'isolation est configurée pour se connecter électriquement à une extrémité de sortie positive d'un premier module photovoltaïque (230), et une seconde extrémité du bus de courant continu négatif est configurée pour se connecter électriquement à une extrémité de sortie négative du premier module photovoltaïque ; une première extrémité du premier circuit de dérivation est connectée électriquement à la deuxième extrémité du circuit d'isolation, et une deuxième extrémité du premier circuit de dérivation est connectée électriquement à la seconde extrémité du bus de courant continu négatif ; et une première extrémité du circuit de commande d'entraînement est connectée électriquement à une troisième extrémité du circuit d'isolation, une seconde extrémité du circuit de commande d'entraînement est connectée électriquement à une troisième extrémité du premier circuit de dérivation, et après la configuration du circuit de commande d'entraînement pour détecter que le bus de courant continu positif et le bus de courant continu négatif sont défectueux, le circuit de commande d'entraînement est configuré pour commander la première extrémité et la deuxième extrémité du premier circuit de dérivation à se connecter et est configuré pour commander la première extrémité et la deuxième extrémité du circuit d'isolation à se déconnecter, de sorte que le premier module photovoltaïque est déconnecté du bus de courant continu positif, dans lequel un point temporel au niveau duquel le circuit d'isolation est déconnecté est postérieur à un point temporel au niveau duquel le premier circuit de dérivation est connecté ; soit
b) lorsqu'une première extrémité du circuit d'isolation est connectée électriquement à une seconde extrémité du bus de courant continu négatif, une deuxième extrémité du circuit d'isolation est configurée pour se connecter électriquement à une extrémité de sortie négative du premier module photovoltaïque, et une seconde extrémité du bus de courant continu positif est configurée pour se connecter électriquement à une extrémité de sortie positive du premier module photovoltaïque ; une première extrémité du premier circuit de dérivation est connectée électriquement à la seconde extrémité du bus de courant continu positif, et une deuxième extrémité du premier circuit de dérivation est connectée électriquement à la deuxième extrémité du circuit d'isolation ; et une première extrémité du circuit de commande d'entraînement est connectée électriquement à une troisième extrémité du circuit d'isolation, une seconde extrémité du circuit de commande d'entraînement est connectée électriquement à une troisième extrémité du premier circuit de dérivation, et après la configuration du circuit de commande d'entraînement pour détecter que le bus de courant continu positif et le bus de courant continu négatif sont défectueux, le circuit de commande d'entraînement est configuré pour commander la première extrémité et la deuxième extrémité du premier circuit de dérivation à se connecter et est configuré pour commander la première extrémité et la deuxième extrémité du circuit d'isolation à se déconnecter, de sorte que le premier module photovoltaïque est déconnecté du bus de courant continu négatif, dans lequel un point temporel au niveau duquel le circuit d'isolation est déconnecté est postérieur à un point temporel au niveau duquel le premier circuit de dérivation est connecté,
**caractérisé en ce que**
l'onduleur photovoltaïque comprend en outre un condensateur de bus, deux extrémités du condensateur de bus sont connectées électriquement au bus de courant continu positif et au bus de courant continu négatif respectivement, et la première unité comprend en outre un premier commutateur anti-reflux (240) ; et dans lequel soit
a) lorsque la première extrémité du circuit d'isolation est connectée électriquement à la seconde extrémité du bus de courant continu positif, une première extrémité du premier commutateur anti-reflux est connectée électriquement à la seconde extrémité du bus de courant continu positif, et une seconde extrémité du premier commutateur anti-reflux est connectée électriquement à la première extrémité du circuit d'isolation, ou une première extrémité du premier commutateur anti-reflux est connectée électriquement à la deuxième extrémité du circuit d'isolation, et une seconde extrémité du premier commutateur anti-reflux est connectée électriquement à la première extrémité du premier circuit de dérivation, ou une première extrémité du premier commutateur anti-reflux est connectée électriquement à la deuxième extrémité du premier circuit de dérivation, et une seconde extrémité du premier commutateur anti-reflux est connectée électriquement à une seconde extrémité du bus de courant continu négatif, dans lequel après la connexion du premier circuit de dérivation, le premier commutateur anti-reflux est configuré pour empêcher le condensateur de bus d'être déchargé à l'aide du premier circuit de dérivation ; soit
b) lorsque la première extrémité du circuit d'isolation est connectée électriquement à la seconde extrémité du bus de courant continu négatif, une première extrémité du premier commutateur anti-reflux est connectée électriquement à la seconde extrémité du bus de courant continu positif, et une seconde extrémité du premier commutateur anti-reflux est connectée électriquement à la première extrémité du premier circuit de dérivation, ou une première extrémité du premier commutateur anti-reflux est connectée électriquement à la deuxième extrémité du premier circuit de dérivation, et une seconde extrémité du premier commutateur anti-reflux est connectée électriquement à la deuxième extrémité du circuit d'isolation, ou une première extrémité du premier commutateur anti-reflux est connectée électriquement à la première extrémité du circuit d'isolation, et une seconde extrémité du premier commutateur anti-reflux est connectée électriquement à la seconde extrémité du bus de courant continu négatif, dans lequel après la connexion du premier circuit de dérivation, le premier commutateur anti-reflux est configuré pour empêcher le condensateur de bus d'être déchargé à l'aide du premier circuit de dérivation.

2. Onduleur photovoltaïque selon la revendication 1, dans lequel le premier circuit de dérivation (210) est un commutateur normalement ouvert, le circuit d'isolation (220) est un disjoncteur normalement ouvert, et lorsque l'onduleur photovoltaïque est démarré, après la commande par le circuit de commande d'entraînement (140) du premier circuit de dérivation de sorte qu'une différence de tension entre la première extrémité et la deuxième extrémité du circuit d'isolation est inférieure ou égale à une tension prédéfinie, le circuit de commande d'entraînement est configuré pour commander la première extrémité et la deuxième extrémité du circuit d'isolation à se connecter, de sorte que le premier module photovoltaïque (230) est connecté respectivement au bus de courant continu positif et au bus de courant continu négatif ; et après la connexion du circuit d'isolation, le circuit de commande d'entraînement est en outre configuré pour commander la première extrémité et la deuxième extrémité du premier circuit de dérivation à se déconnecter, pour terminer le démarrage de l'onduleur photovoltaïque.

3. Onduleur photovoltaïque selon la revendication 1, dans lequel la première unité (200) comprend en outre au moins une seconde unité, et la seconde unité comprend un second circuit de dérivation ; et
lorsque la première extrémité du circuit d'isolation (220) est connectée électriquement à la seconde extrémité du bus de courant continu positif (120), une première extrémité du second circuit de dérivation est connectée électriquement à la deuxième extrémité du circuit d'isolation et est configurée pour se connecter électriquement à une première extrémité d'un second module photovoltaïque, une deuxième extrémité du second circuit de dérivation est connectée électriquement à la seconde extrémité du bus de courant continu négatif (130) et est configurée pour se connecter électriquement à une seconde extrémité du second module photovoltaïque, la seconde extrémité du circuit de commande d'entraînement (140) est connectée électriquement à une troisième extrémité du second circuit de dérivation, et après la configuration du circuit de commande d'entraînement pour détecter que le bus de courant continu positif et le bus de courant continu négatif sont défectueux, le circuit de commande d'entraînement est configuré pour commander la première extrémité et la deuxième extrémité du second circuit de dérivation à se connecter et est configuré pour commander la première extrémité et la deuxième extrémité du circuit d'isolation à se déconnecter, de sorte que le second module photovoltaïque est déconnecté du bus de courant continu positif, dans lequel un point temporel au niveau duquel le circuit d'isolation est déconnecté est postérieur à un point temporel au niveau duquel le second circuit de dérivation est connecté ; ou
lorsque la première extrémité du circuit d'isolation est connectée électriquement à la seconde extrémité du bus de courant continu négatif, une première extrémité du second circuit de dérivation est connectée électriquement à la seconde extrémité du bus de courant continu positif et est configurée pour se connecter électriquement à une première extrémité d'un second module photovoltaïque, une deuxième extrémité du second circuit de dérivation est connectée électriquement à la deuxième extrémité du circuit d'isolation et est configurée pour se connecter électriquement à une seconde extrémité du second module photovoltaïque, la seconde extrémité du circuit de commande d'entraînement est connectée électriquement à une troisième extrémité du second circuit de dérivation, et après la configuration du circuit de commande d'entraînement pour détecter que le bus de courant continu positif et le bus de courant continu négatif sont défectueux, le circuit de commande d'entraînement est configuré pour commander la première extrémité et la deuxième extrémité du second circuit de dérivation à se connecter et est configuré pour commander la première extrémité et la deuxième extrémité du circuit d'isolation à se déconnecter, de sorte que le second module photovoltaïque est déconnecté du bus de courant continu négatif, dans lequel un point temporel au niveau duquel le circuit d'isolation est déconnecté est postérieur à un point temporel au niveau duquel le second circuit de dérivation est connecté.

4. Onduleur photovoltaïque selon la revendication 3, dans lequel
lorsque la première extrémité du circuit d'isolation (220) est connectée électriquement à la seconde extrémité du bus de courant continu positif (120), une première extrémité du premier commutateur anti-reflux (240) est connectée électriquement à la deuxième extrémité du circuit d'isolation (220) et à la première extrémité du second circuit de dérivation respectivement, et une seconde extrémité du premier commutateur anti-reflux est connectée électriquement à la première extrémité du premier circuit de dérivation (210), ou une première extrémité du premier commutateur anti-reflux est connectée électriquement à la deuxième extrémité du premier circuit de dérivation, et une seconde extrémité du premier commutateur anti-reflux est connectée électriquement à la seconde extrémité du bus de courant continu négatif (130) et à la deuxième extrémité du second circuit de dérivation respectivement, dans lequel après la connexion du premier circuit de dérivation, le premier commutateur anti-reflux est configuré pour empêcher le condensateur de bus et le second module photovoltaïque d'être déchargés à l'aide du premier circuit de dérivation ; ou
lorsque la première extrémité du circuit d'isolation est connectée électriquement à la seconde extrémité du bus de courant continu négatif, une première extrémité du premier commutateur anti-reflux est connectée électriquement à la seconde extrémité du bus de courant continu positif et à la première extrémité du second circuit de dérivation respectivement, et une seconde extrémité du premier commutateur anti-reflux est connectée électriquement à la première extrémité du premier circuit de dérivation, ou une première extrémité du premier commutateur anti-reflux est connectée électriquement à la deuxième extrémité du premier circuit de dérivation, et une seconde extrémité du premier commutateur anti-reflux est connectée électriquement à la deuxième extrémité du circuit d'isolation et à la deuxième extrémité du second circuit de dérivation respectivement, dans lequel après la connexion du premier circuit de dérivation, le premier commutateur anti-reflux est configuré pour empêcher le condensateur de bus et le second module photovoltaïque d'être déchargés à l'aide du premier circuit de dérivation.

5. Onduleur photovoltaïque selon la revendication 3, dans lequel la seconde unité comprend en outre un second commutateur anti-reflux ; et
lorsque la première extrémité du circuit d'isolation (220) est connectée électriquement à la seconde extrémité du bus de courant continu positif (120), une première extrémité du second commutateur anti-reflux est connectée électriquement à la deuxième extrémité du circuit d'isolation et à la première extrémité du premier circuit de dérivation (210) respectivement, et une seconde extrémité du second commutateur anti-reflux est connectée électriquement à la première extrémité du second circuit de dérivation, ou une première extrémité du second commutateur anti-reflux est connectée électriquement à la deuxième extrémité du second circuit de dérivation, et une seconde extrémité du second commutateur anti-reflux est connectée électriquement à la seconde extrémité du bus de courant continu négatif (130) et à la deuxième extrémité du premier circuit de dérivation, dans lequel après la connexion du second circuit de dérivation, le second commutateur anti-reflux est configuré pour empêcher le condensateur de bus et le premier module photovoltaïque (230) de se décharger à l'aide du second circuit de dérivation ; ou
lorsque la première extrémité du circuit d'isolation est connectée électriquement à la seconde extrémité du bus de courant continu négatif, une première extrémité du second commutateur anti-reflux est connectée électriquement à la seconde extrémité du bus de courant continu positif et à la première extrémité du premier circuit de dérivation respectivement, et une seconde extrémité du second commutateur anti-reflux est connectée électriquement à la première extrémité du second circuit de dérivation, ou une première extrémité du second commutateur anti-reflux est connectée électriquement à la deuxième extrémité du second circuit de dérivation, et une seconde extrémité du second commutateur anti-reflux est connectée électriquement à la deuxième extrémité du circuit d'isolation et à la deuxième extrémité du premier circuit de dérivation respectivement, dans lequel après la connexion du second circuit de dérivation, le second commutateur anti-reflux est configuré pour empêcher le condensateur de bus et le premier module photovoltaïque d'être déchargés à l'aide du second circuit de dérivation.

6. Système de génération d'énergie photovoltaïque, comprenant l'onduleur photovoltaïque selon l'une quelconque des revendications 1 à 5, dans lequel le système de génération d'énergie photovoltaïque comprend en outre un premier module photovoltaïque, et le premier module photovoltaïque est connecté électriquement à l'onduleur photovoltaïque.
